# EUROPEAN PATENT SPECIFICATION

(11) **EP 3 929 705 B1**
(45) Date of publication and mention of the grant of the patent: **12.11.2025**
(21) Application number: 21191698.6
(22) Date of filing: 30.07.2015
(51) Int. Cl.: G06F 3/01, H04M 1/72454, H04M 1/60

(54) **WEARABLE DEVICE AND METHOD OF CONTROLLING THE SAME**
WEARABLE-VORRICHTUNG UND VERFAHREN ZUR STEUERUNG DAVON
DISPOSITIF PORTABLE ET SON PROCÉDÉ DE COMMANDE

(30) Priority: 31.07.2014 KR 20140098519; 24.10.2014 KR 20140145398; 28.04.2015 KR 20150060084
(43) Date of publication of application: 29.12.2021
(62) Divisional of application: 15179166.2
(73) Proprietor: Samsung Electronics Co., Ltd., Suwon-si, Gyeonggi-do 16677 (KR)
(72) Inventor: PARK, Chan-soo, 16677 Suwon-si, (KR); KIM, Hyeon-seong, 16677 Suwon-si, (KR); PARK, Kyong-ha, 16677 Suwon-si, (KR); KIM, Nam-hoon, 16677 Suwon-si, (KR); HONG, Hyun-su, 16677 Suwon-si, (KR)
(74) Representative: HGF

(56) References cited:
- EP-A1- 2 194 472
- EP-A2- 2 733 581
- WO-A2-2009/062176
- US-A1- 2013 249 785
- US-A1- 2014 002 357
- US-A1- 2014 065 976
- US-A1- 2014 181 715
- US-A1- 2014 187 219
- KRAUSE A ET AL: "Context-Aware Mobile Computing: Learning Context-Dependent Personal Preferences from a Wearable Sensor Array", IEEE TRANSACTIONS ON MOBILE COMPUTING, IEEE SERVICE CENTER, LOS ALAMITOS, CA, US, vol. 5, no. 2, 1 February 2006 (2006-02-01), pages 113 - 127, XP001545959, ISSN: 1536-1233, DOI: 10.1109/TMC.2006.18

## Description

### PRIORITY

This application claims priority under 35 U.S.C. 119(a) to Korean Patent Applications filed in the Korean Intellectual Property Office on July 31, 2014 and assigned serial no. 10-2014-0098519, on October 24, 2014 and assigned serial no. 10-2014-0145398, and on April 28, 2014 and assigned serial no. 10-2015-0060084.

### BACKGROUND OF THE INVENTION

### 1. Field of the Invention

The present invention relates generally to a wearable device and a method of controlling the same.

### 2. Description of the Related Art

A wearable device is an electronic device that is worn by a user, such as a smart watch, smart glasses, and a smart band. Due to their characteristics, the wearable devices may collect various types of information related to a user, such as physical signal measurement and operation recognition. Various functions may be provided by the wearable device based on the collected information provides; however, unintended operations also tend to be performed when the wearable devices provide these functions, resulting in user inconvenience.

US2014181715 relates to dynamic user interfaces adapted to inferred user contexts. EP2194472A1 relates to context and activity-driven content delivery and interaction. WO2009062176 Relates to activating applications based on accelerometer data. EP2733581A2 relates to the use of user gesture inputs to wearable electronic devices involving an outward facing sensor of the device. US2014187219Relates to detecting a user-to-wireless device association in a vehicle. US2013249785 relates to a method for prevention of false gesture trigger inputs on a mobile communication device. The document from KRAUSE A ET AL, "Context-Aware Mobile Computing: Learning Context-Dependent Personal Preferences from a Wearable Sensor Array", IEEE TRANSACTIONS ON MOBILE COMPUTING, IEEE SERVICE CENTER, LOS ALAMITOS, CA, US, (20060201), vol. 5, no. 2, doi:10.1109/TMC.2006.18, ISSN 1536-1233, pages 113 - 127, XP001545959 relates to a wearable system which can learn context-dependent personal preferences by identifying individual user states and observing how the user interacts with the system in these states.

### SUMMARY OF THE INVENTION

The scope of protection conferred is determined from the claims.

The present invention has been made to address the above-mentioned problems and disadvantages, and to provide at least the advantages described below. Accordingly, an aspect of the present invention provides that when a wearable device recognizes a motion of a user and provides a preset function, the wearable device is prevented from performing another operation than the operation intended by the user.

Another aspect of the present invention provides that when a user of a wearable device is driving a vehicle, user's convenience may be improved by changing setting of a function of the wearable device or by executing a required function.

Another aspect of the present invention provides that various functions may be provided to a user of a wearable device, while the user is driving a vehicle, by communication between the wearable device and the vehicle.

Another aspect of the present invention provides a wearable device that correctly recognizes a state of a user who wears the wearable device and is driving a vehicle.

According to an aspect of the present invention, there is provided a wearable device including a sensor unit configured to detect at least one movement of the wearable device; and a control unit configured to determine a state of the wearable device based on the at least one detected movement, and to control, based on the determined state, the wearable device to operate in a first mode of performing a preset function of the wearable device or in a second mode of not performing the preset function.

According to another aspect of the present invention, there is provided a method of controlling a wearable device, including detecting at least one movement of the wearable device; determining a state of the wearable device based on the at least one detected movement; and controlling, based on the determined state, the wearable device to operate in a first mode of performing a preset function of the wearable device or in a second mode of not performing the preset function.

According to another aspect of the present invention, there is provided a mobile device configured to control a wearable device, the mobile device including a communication unit configured to receive state information of the wearable device from the wearable device; and a control unit configured to determine, based on the state information, a driving state of a user who wears the wearable device and drives a vehicle, and provide a control command to the wearable device via the communication unit according to the driving state, wherein the control command is for executing at least one function of the wearable device.

According to another aspect of the present invention, there is provided a method of controlling a wearable device, the method being performed by a mobile device and including receiving state information of the wearable device from the wearable device; determining, based on the state information of the wearable device, a driving state of a user who wears the wearable device and drives a vehicle; and providing a control command to the wearable device according to the driving state, wherein the control command is for executing at least one function of the wearable device.

According to another aspect of the present invention, there is provided a non-transitory computer-readable recording medium having recorded thereon a program which, when executed by a computer, performs a method of controlling a wearable device, the method being performed by a mobile device and comprising receiving state information of the wearable device from the wearable device, determining, based on the state information of the wearable device, a driving state of a user who wears the wearable device and drives a vehicle, and providing a control command to the wearable device according to the driving state, wherein the control command is for executing at least one function of the wearable device.

### BRIEF DESCRIPTION OF THE DRAWINGS

The above and other aspects, features and advantages of certain embodiments of the present invention will become more apparent from the following detailed description in conjunction with the accompanying drawings, in which:
FIG. 1 illustrates an operation of a wearable device, according to an embodiment of the present invention;
FIG. 2 illustrates a wearable device, according to an embodiment of the present invention;
FIG. 3 illustrates a sensor unit, according to an embodiment of the present invention;
FIG. 4 illustrates a method of controlling the wearable device, according to an embodiment of the present invention;
FIG. 5 illustrates a procedure of changing setting of a function of a wearable device, according to an embodiment of the present invention;
FIG. 6 illustrates the wearable device, according to an embodiment of the present invention;
FIG. 7 illustrates an operation of a wearable device, according to an embodiment of the present invention;
FIG. 8 illustrates motion recognition by a wearable device, according to an embodiment of the present invention;
FIG. 9 illustrates an operation of a wearable device, according to another embodiment of the present invention;
FIG. 10 illustrates an operation of a wearable device, according to another embodiment of the present invention;
FIG. 11 illustrates an operation of a wearable device, according to another embodiment of the present invention;
FIG. 12 illustrates an operation of a wearable device, according to another embodiment of the present invention;
FIG. 13 illustrates an operation of a wearable device, according to another embodiment of the present invention;
FIG. 14 illustrates a method of controlling a wearable device, according to an embodiment of the present invention;
FIG. 15 illustrates an operation in which, when a user is driving, a wearable device performs a preset function, according to an embodiment of the present invention;
FIG. 16 illustrates an operation in which, when a user is driving, a wearable device performs a preset function, according to an embodiment of the present invention;
FIG. 17 illustrates an operation in which, when a user is driving, a wearable device performs a preset function, according to an embodiment of the present invention;
FIG. 18 illustrates a wearable device according to an embodiment of the present invention;
FIG. 19 illustrates an example in which a wearable device according to the present embodiment communicates with external devices;
FIG. 20 illustrates a communication unit, according to an embodiment of the present invention;
FIG. 21 illustrates a method of controlling a wearable device, according to an embodiment of the present invention;
FIG. 22 illustrates a wearable device and an external device, according to an embodiment of the present invention;
FIG. 23 illustrates a wearable device and an external device, according to another embodiment of the present invention;
FIG. 24 illustrates a method of controlling a wearable device, according to an embodiment of the present invention;
FIG. 25 illustrates a method of determining whether a user of a wearable device is driving, according to an embodiment of the present invention;
FIG. 26 illustrates a method of determining whether a user of a wearable device is driving, according to an embodiment of the present invention;
FIGs. 27(a)-(b) illustrate a wearable device, according to an embodiment of the present invention;
FIG. 28 illustrates a wearable device, according to an embodiment of the present invention;
FIG. 29 illustrates a wearable device, according to an embodiment of the present invention;
FIG. 30 illustrates a wearable device, according to an embodiment of the present invention;
FIG. 31 illustrates a wearable device, according to an embodiment of the present invention;
FIG. 32 illustrates a method of determining whether a user of a wearable device is driving, according to an embodiment of the present invention;
FIG. 33 illustrates a method of determining whether a user is driving, according to an embodiment of the present invention;
FIG. 34 illustrates a method of determining whether a user is driving, according to an embodiment of the present invention;
FIG. 35 illustrates a method of determining whether a user is driving, according to an embodiment of the present invention;
FIG. 36 illustrates a method of determining whether a user is driving, according to an embodiment of the present invention;
FIG. 37 illustrates a method of determining whether a user is driving, according to an embodiment of the present invention;
FIG. 38 illustrates a method of determining whether a user is driving, according to an embodiment of the present invention;
FIG. 39 illustrates a method of determining whether a user is driving, according to an embodiment of the present invention;
FIG. 40 illustrates a method of controlling a wearable device, according to an embodiment of the present invention;
FIG. 41 illustrates a method of determining whether a user is in a vehicle, the method being performed by a wearable device, according to an embodiment of the present invention;
FIG. 42 illustrates a method of determining whether a user is in a vehicle, the method being performed by a wearable device, according to an embodiment of the present invention;
FIG. 43 illustrates a method of determining whether a user of a wearable device is in a vehicle, according to an embodiment of the present invention;
FIG. 44 illustrates a method of controlling a wearable device, according to an embodiment of the present invention;
FIG. 45 illustrates a method of determining whether a user is on public transportation, according to an embodiment of the present invention;
FIG. 46 illustrates a method of determining whether a user is on public transportation, according to an embodiment of the present invention;
FIG. 47 illustrates a method of determining whether a user is on public transportation, according to an embodiment of the present invention;
FIG. 48 is a block diagram illustrating a configuration of a wearable device, according to an embodiment of the present invention;
FIG. 49 illustrates an example in which a wearable device performs a particular function according to a state of a user in a vehicle, by using at least one of an external device and the vehicle, according to an embodiment of the present invention;
FIG. 50 illustrates a method of establishing a network with a mobile device and a vehicle and performing a particular function when a user is driving, the method being performed by a wearable device, according to an embodiment of the present invention;
FIG. 51 illustrates a method of establishing a network with a mobile device and performing a particular function when a user is driving, the method being performed by a wearable device, according to an embodiment of the present invention;
FIG. 52 illustrates a method of establishing a network with a vehicle and performing a particular function when a user is driving, the method being performed by a wearable device, according to an embodiment of the present invention;
FIG. 53 illustrates a method of executing a function of a wearable device according to a control command received from a mobile device, when the wearable device satisfies a preset condition, according to an embodiment of the present invention;
FIG. 54 illustrates a method of executing a function of a wearable device according to a control command received from a vehicle, when the wearable device satisfies a preset condition, according to an embodiment of the present invention;
FIG. 55 illustrates an example in which a wearable device and a mobile device of a user who is driving a vehicle perform a phone call with another device of another user, according to an embodiment of the present invention;
FIG. 56 illustrates a method of performing a phone call with another device via a mobile device, the method being performed by a wearable device of a user who is driving, according to an embodiment of the present invention; and
FIG. 57 illustrates a method of directly performing a phone call with the another device, the method being performed by a wearable device of a user who is driving, according to an embodiment of the present invention.

### DETAILED DESCRIPTION OF EMBODIMENTS OF THE INVENTION

Embodiments of the present invention will be described with reference to the accompanying drawings.. The present invention may, however, be embodied in many different forms and should not be construed as being limited to the one or more embodiments set forth herein. Rather, these one or more embodiments are provided so that this disclosure will be thorough and complete and will fully convey the concept of the one or more embodiments to those skilled in the art. A detailed description of related known configurations or functions incorporated herein will be omitted for the sake of clarity and conciseness.

Hereinafter, terms that are used in the specification will be briefly described, and the present invention will be described in detail.

All terms including descriptive or technical terms which are used herein should be construed as having meanings that are obvious to one of ordinary skill in the art. However, the terms may have different meanings according to an intention of one of ordinary skill in the art, precedent cases, or the appearance of new technologies. Also, some terms may be arbitrarily selected by the applicant, and in this case, the meaning of the selected terms will be described in detail herein. Thus, the terms used herein are to be defined based on the meanings of the terms together with the description throughout the specification.

Throughout the specification, when one or more elements have the same name and are indicated with different reference numerals, the one or more elements may perform the same function and include the same sub-elements.

Throughout the specification, when a part "includes" or "comprises" an element, unless there is a particular description contrary thereto, the part can further include other elements, not excluding the other elements. Also, throughout the specification, the term 'unit' indicates a software component or hardware components such as a field-programmable gate array (FPGA) or an application-specific integrated circuit (ASIC), and performs a specific function. However, the term 'unit' is not limited to software or hardware, and may be formed so as to be in an addressable storage medium or operate one or more processors. Thus, for example, the term 'unit' may refer to components such as software components, object-oriented software components, class components, and task components, and includes processes, functions, attributes, procedures, subroutines, segments of program code, drivers, firmware, micro codes, circuits, data, a database, data structures, tables, arrays, or variables. A function provided by the components and 'units' may be associated with fewer components and 'units', or may be divided into additional components and 'units'.

As used herein, the term "and/or" includes any and all combinations of one or more of the associated listed items. Expressions such as "at least one of," when preceding a list of elements, modify the entire list of elements and not the individual elements of the list.

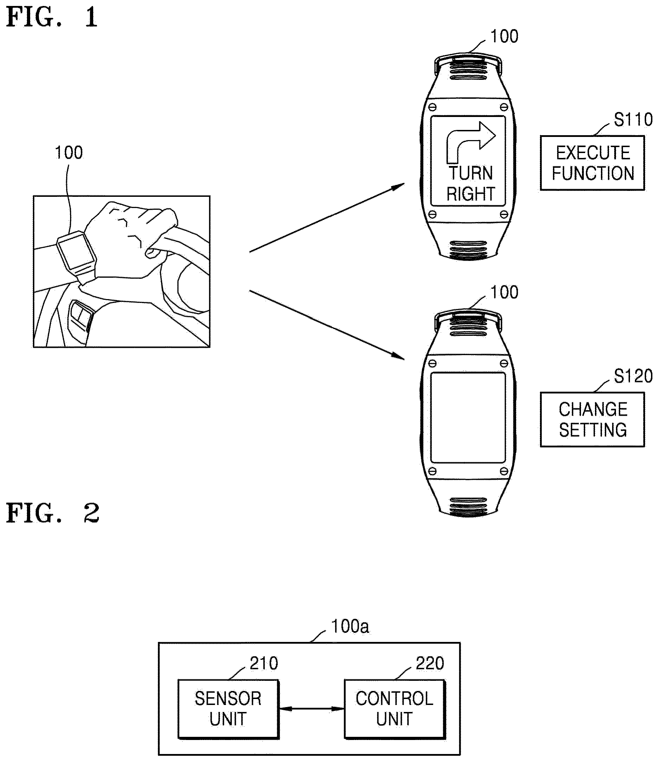

FIG. 1 illustrates an operation of a wearable device, according to an embodiment of the present invention.

When a wearable device 100 according to the present embodiment recognizes that a user who wears the wearable device 100 is driving, the wearable device 100 automatically executes a function that is provided by the wearable device 100 in step S110 or changes the setting of the function that is provided by the wearable device 100 in step S120.

The wearable device 100 is an electronic device that may be worn by a user, and may be embodied in a wristwatch, glasses, earrings, a necklace, earphones, an earring-type accessory, shoes, a ring, clothes, or a helmet, for example. However, the wearable device 100 is not limited thereto, and may be embodied in forms that are directly attached to or detached from a body of the user. For example, the wearable device 100 may have a patch structure that may be attached to a user's body in an adhesive manner or non-adhesive manner. The wearable device 100 may be inserted into the body of the user, such as an epidermal electronics skin (i.e., an E-skin) or an electronic tattoo (i.e., E-Tattoo), and may be subcutaneously or invasively inserted into the body.

When worn, the wearable device 100 contacts the body of the user in a preset manner. For example, the user may wear the wearable device 100 in a manner in which the user wears a wristwatch, glasses, earrings, a necklace, earphones, an earring-type accessory on an auricle, shoes, a ring, clothes, or a helmet, .

When the user is driving a vehicle such as a car, motorcycle, bicycle, bus, subway car, electronic railway car, train, airplane, helicopter, or a ship, the user sits in the driver's seat and manipulates the vehicle. For example, when the user performs operations including turning a steering wheel, manipulating gear, manipulating an accelerator pedal and a brake pedal, or checking a gauge board of the vehicle, the wearable device 100 recognizes that the user is driving. Functions that are provided by the wearable device 100 may be provided via an operating system (OS) or an application. For example, the functions include automatic screen-on display, navigation, overspeed notification, provision of traffic status information, drowsy-driving prevention, augmented reality display, standby mode conversion, notification, a pedometer, communication with a vehicle, or communication with another electronic device.

When the wearable device 100 recognizes that the user who wears the wearable device 100 is driving, the wearable device 100 may automatically execute one or more of the aforementioned functions that are previously set to be provided to a user during driving. When the wearable device 100 recognizes that the user who wears the wearable device 100 is driving, the wearable device 100 changes the settings of the functions that are provided by the wearable device 100. For example, when the user of the wearable device 100 is driving, the wearable device 100 deactivates an automatic screen-on function, switches a mode of the wearable device 100 to a standby mode, blocks notification, stops counting the number of steps of the pedometer, or deactivates or activates communications with the vehicle.

FIG. 2 illustrates a structure of a wearable device, according to an embodiment of the present invention.

A wearable device 100a as illustrated in FIG. 2 includes a sensor unit 210 and a control unit 220.

The sensor unit 210 obtains state information of the wearable device 100a and includes at least one sensor capable of obtaining the state information of the wearable device 100a. The state information includes a sensing value output from the at least one sensor included in the sensor unit 210.

The sensing value may vary according to type. For example, the sensing value includes an acceleration value, location information, or an image-capturing signal.

The control unit 220 controls general operations of the wearable device 100a. The control unit 220 according to the present embodiment determines whether a user who wears the wearable device 100a is driving, based on the state information output from the sensor unit 210. If the user is driving, the control unit 220 changes setting of at least one function of the wearable device 100a, or performs the at least one function of the wearable device 100a.

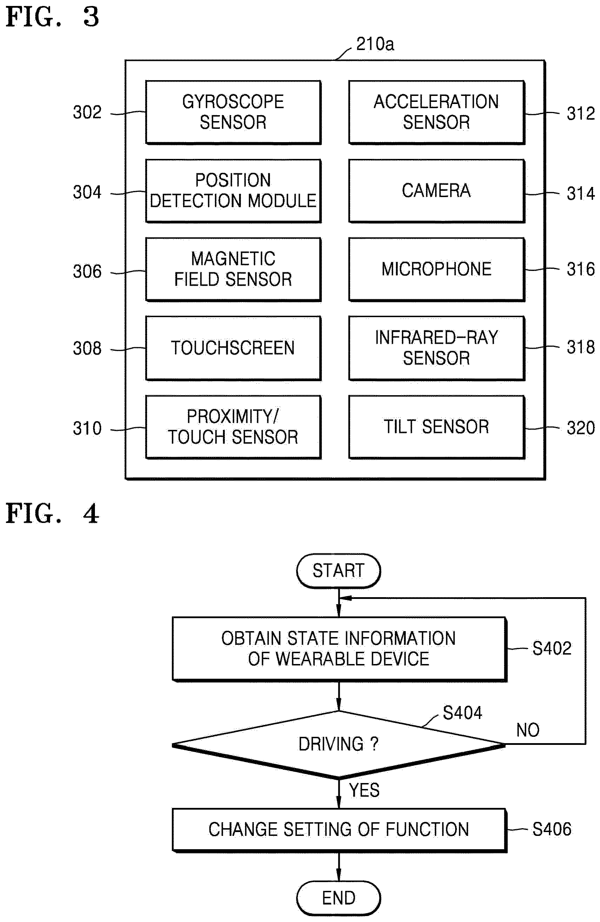

FIG. 3 illustrates a structure of a sensor unit, according to an embodiment of the present invention.

The sensor unit 210a includes a gyroscope sensor 302, a position detection module 304, a magnetic field sensor 306, a touchscreen 308, a proximity/touch sensor 310, an acceleration sensor 312, a camera 314, a microphone 316, an infrared-ray sensor 318, and a tilt sensor 320. However, one or more embodiments are not limited thereto, and the sensor unit 210a may further include an air pressure sensor, an illumination sensor, or a gravity sensor, for example. The position detection module 304 includes a global positioning system (GPS) module, a Wi-Fi protected setup (WPS) module, or a Bluetooth^{®} low energy (BLE) module, for example.

The type of sensor in the sensor unit 210a may vary according to form or an embodiment of the wearable device 100a. For example, the wearable device 100a in a wristwatch form includes the position detection module 304, magnetic field sensor 306, touchscreen 308, acceleration sensor 312, camera 314, and microphone 316. The wearable device 100a in a glasses form includes the gyroscope sensor 302, position detection module 304, proximity/touch sensor 310, acceleration sensor 312, camera 314, microphone 316, and tilt sensor 320.

FIG. 4 illustrates a method of controlling a wearable device, according to an embodiment of the present invention. For example, the method of FIG. 4 will be described using the wearable device 100, as illustrated in FIG. 1.

The wearable device 100 obtains state information of the wearable device 100 in step S402. For example, by using at least one included sensor, the wearable device 100 obtains the state information such as an acceleration value, a vibration value, a tilt value, location information, magnetic field information, proximity/touch information, an image-capturing signal, sound, or an infrared-ray detection value.

The wearable device 100 determines, by using the state information, whether a user who wears the wearable device 100 is driving in step S404. The wearable device 100 recognizes whether the user is driving by determining whether state information indicating that the user is driving is detected. The wearable device 100 stores driving state information indicating that the user is driving. Also, in order to determine whether the user is driving, the wearable device 100 compares the stored driving state information with the obtained state information. As a result of the comparison, if a difference between the stored driving state information and the obtained state information is equal to or less than a reference value, the wearable device 100 determines that the user is driving.

When the wearable device 100 determines that the user is driving in step S404, the wearable device 100 changes setting of at least one function of the wearable device 100 in step S406, such as an automatic screen-on function and a pedometer function, and the wearable device 100 may have information about the one or more functions of which settings are to be changed. To change setting of a function indicates deactivating the function or changing an execution form of the function. For example, when the wearable device 100 determines that the user is driving, the wearable device 100 changes the settings of the one or more functions so that the wearable device 100 reads a text message aloud, places a phone on speakerphone, changes the state of the phone to an automatic answering mode, replies to an incoming call by automatically sending a text message, deactivates an automatic screen-on display function for automatically turning on a screen when a preset motion is detected, deactives counting the number of steps by the pedometer, deactivates Wi-Fi and near field communication (NFC), activates voice recognition, or changes the size and the number of buttons on a screen of a user interface.

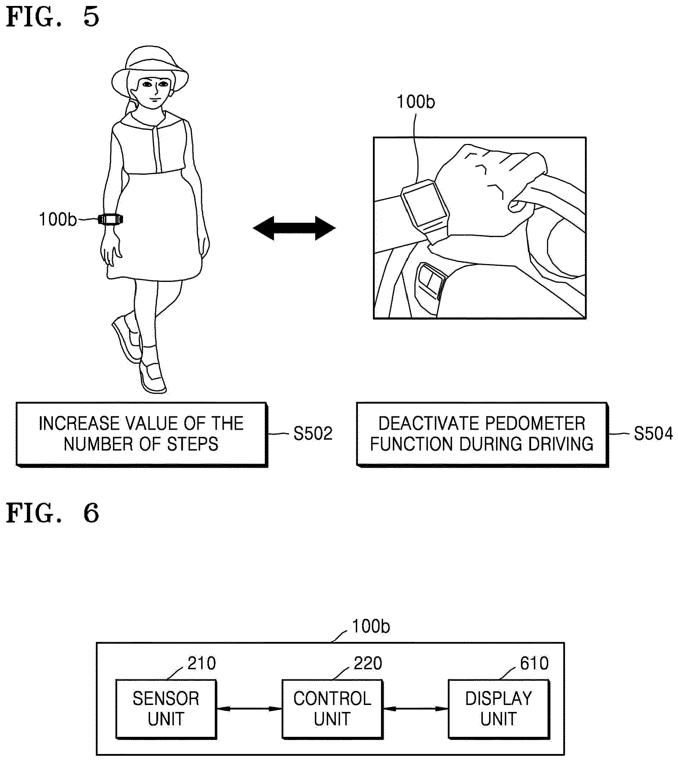

FIG. 5 illustrates a procedure of changing setting of a function of a wearable device, according to an embodiment of the present invention.

The wearable device 100b in FIG. 5 provides a pedometer function that counts the number of steps of a user by detecting movement information in step S502. For example, the control unit 220 counts the number of steps of the user by using an acceleration measurement value generated by the acceleration sensor 312 of the sensor unit 210. According to an embodiment, when the sensor unit 210a determines that generated acceleration measurement values in x, y, and z directions are equal to or greater than acceleration values in preset threshold x, y, and z directions, the sensor unit 210a generates an interrupt signal and transmits the interrupt signal to the control unit 220. When the control unit 220 receives the interrupt signal from the sensor unit 210a, the control unit 220 increases a value of the number of steps.

When the wearable device 100b according to the present embodiment determines that the user is driving, the wearable device 100a deactivates the pedometer function in step S504. In this instance, even if the wearable device 100b detects movement information that satisfies a condition for increasing the value of the number of steps, the wearable device 100a may not increase the value of the number of steps.

According to the present embodiment, since the wearable device 100b does not increase the value of the number of steps while the user is driving, the accuracy of the pedometer function improves. The wearable device 100b according to the present embodiment may be embodied in various forms including a wristwatch, a bracelet, a band, glasses, clothes, shoes, a ring, or earrings, for example.

FIG. 6 illustrates a wearable device, according to an embodiment of the present invention.

The wearable device 100b according to the present embodiment includes the sensor unit 210, the control unit 220, and a display unit 610.

The sensor unit 210 obtains state information of the wearable device 100b and includes at least one sensor capable of obtaining the state information of the wearable device 100b.

The control unit 220 controls general operations of the wearable device 100b. The control unit 220 according to the present embodiment determines whether a user who wears the wearable device 100b is driving, based on the state information output from the sensor unit 210. If the user is driving, the control unit 220 changes setting of at least one function of the wearable device 100b, or performs the at least one function of the wearable device 100b.

The display unit 610 displays the state information of the wearable device 100b and an execution screen of an application, for example. The display unit 610 includes a liquid crystal display (LCD) device or an organic electroluminescent display device, for example, and may be embodied in various positions and forms, according to a type of the wearable device 100b. For example, when the wearable device 100b is embodied as a wristwatch, the display unit 610 may be disposed at a watch plate. When the wearable device 100b is embodied as glasses, the display unit 610 may be disposed as a transparent display at a lens of the glasses. When the wearable device 100b is embodied as a helmet, the display unit 610 may be disposed as a transparent display at a transparent front window of the helmet.

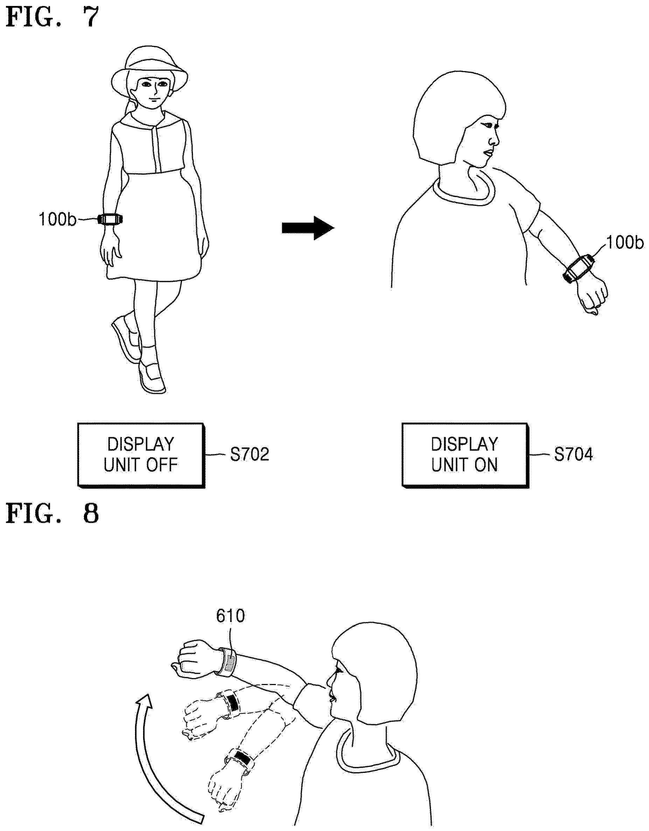

FIG. 7 illustrates an operation of the wearable device 100b, according to an embodiment of the present invention.

In FIG. 7, the wearable device 100b is embodied as a wristwatch worn on a user's wrist. As illustrated in step S702, when the user's arm with the wrist on which the the wearable device 100b is worn is along the user's body, and the user raises his or her arm to allow the display unit 610 of the wearable device 100b to face the user's face as illustrated in step S704, the wearable device 100bprovides an automatic screen-on display function for changing a display-off state in step S702 of the display unit 610 of the wearable device 100b to a display-on state in step S704.

FIG. 8 illustrates motion recognition by the wearable device 100b, according to an embodiment of the present invention.

In FIG. 7, the automatic screen-on function is provided by a detection of movement of the wearable device 100b, such as in a preset form as illustrated in FIG. 8. When the movement is detected, the wearable device 100b automatically activates the display unit 610. For example, as illustrated in FIG. 8, the movement in the preset form to perform the automatic screen-on function is such that the display unit 610 of the wearable device 100b in a vertical direction is moved in a horizontal direction due to a circular movement. In addition to the movement illustrated in FIG. 8, movements in various forms may be set to perform the automatic screen-on function.

In order to detect movement information, the wearable device 100b includes the sensor unit 210 including a gyroscope sensor or an acceleration sensor, for example.

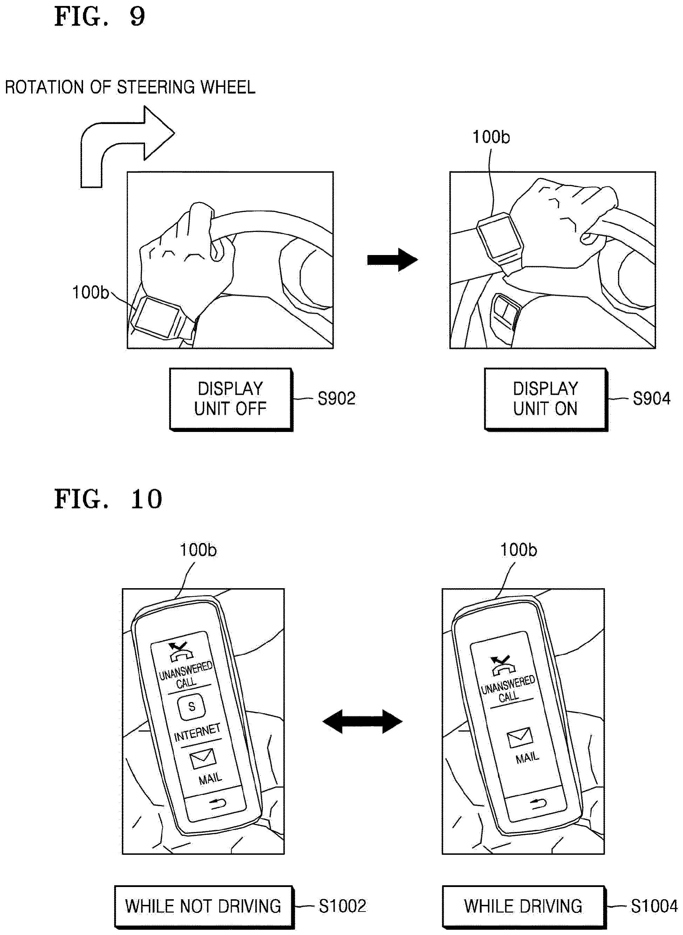

FIG. 9 illustrates an operation of the wearable device 100b, according to another embodiment of the present invention.

As described with reference to FIG. 7, when the wearable device 100b in the wristwatch form that provides the automatic screen-on function determines that a user is driving, the wearable device 100b may deactivates the automatic screen-on function. In this case, even if the wearable device 100b detects the preset movement for the automatic screen-on function, the wearable device 100b does not automatically turn on the display unit 610.

If the user wears the wearable device 100b in the wristwatch form while driving, when the user holds and turns a steering wheel by using the hand of the arm with the wrist on which the wearable device 100b is worn, the preset movement for the automatic screen-on function is detected. For example, as illustrated in FIG. 9, while the user holds a left side or a right side of the steering wheel by the hand of the arm with the wrist on which the wearable device 100b is worn in step S902, when the user turns the steering wheel in an upper direction of the steering wheel in step S904, the movement in the preset form to perform the automatic screen-on function as described above with reference to FIGS. 7 and 8 is detected. According to the present embodiment, even if the user turns the steering wheel and thus the wearable device 100b detects the present movement for the automatic screen-on function as illustrated in FIG. 9, the wearable device 100b does not automatically turn on the display unit 610, which prevents user inconvenience since the display unit 610 is turned on against an intention of the user.

FIG. 10 illustrates an operation of the wearable device 100b, according to another embodiment of the present invention.

According to the present embodiment, when a user is driving, the wearable device 100b changes parameters such as the size, number, or disposition of one or more objects displayed on the display unit 610 in step S1004. The one or more objects include an object for executing a function or an application or for selecting and reproducing contents, for example. Each of the one or more objects may be displayed in the form of an icon, a thumbnail image, a music reproduction list, or a video reproduction list, for example.

According to the present embodiment, when a user is driving, the wearable device 100b increases a size of the one or more objects displayed on the display unit 610, decreases the number of the one or more objects displayed on the display unit 610, and increases a space between one or more objects displayed on the display unit 610, compared to when the user is not driving.

For example, as illustrated in FIG. 10, when the user is not driving, three application execution icons are displayed on the display unit 610 in step S1002, and when the user is driving, two application execution icons are displayed on the display unit 610 so that a space between the application execution icons widens in step S1004.

According to the present embodiment, when the user manipulates the wearable device 100b while the user is driving, the one or more objects are even more clearly shown and are more easily manipulable, thereby decreasing manipulation complexity and a possibility of an error during the manipulation.

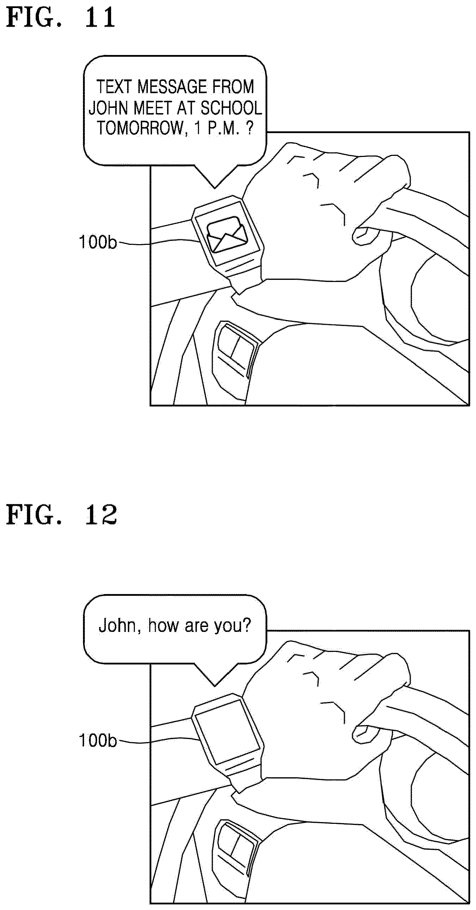

FIG. 11 illustrates an operation of the wearable device 100b, according to another embodiment of the present invention.

When the wearable device 100b according to the present embodiment determines that a user is driving, the wearable device 100b changes a manner of providing notification to the user. The notification includes notification of a text message, a call, or an application, for example, and the notification form includes at least one of screen-on and a display of notification content, sound, and vibration, or a combination thereof.

In an embodiment, when the wearable device 100b determines that the user is driving, the wearable device 100b may not provide the notification. In this case, even if a notification event occurs, the wearable device 100b does not perform a notification operation such as screen-on, the display of notification content, the sound, or the vibration.

In another embodiment, when the wearable device 100b determines that the user is driving, the wearable device 100b vocally outputs contents of the notification, such as vocally reading content of a text message received while the user is driving. When a notification is generated in an application, the wearable device 100b may vocally read content of the notification generated in the application. To do so, the wearable device 100b includes a module for converting content of notification into voice. Therefore, when the notification event occurs while the user is driving, the user recognizes content of the notification without manipulating the wearable device 100b or checking the display unit 610.

FIG. 12 illustrates an operation of the wearable device 100b, according to another embodiment of the present invention.

According to the present embodiment, if the wearable device 100b determines that the user is driving, when the wearable device 100b receives an incoming call, the wearable device 100b executes a speakerphone function when the incoming call is answered. The speakerphone function allows a user to make a call while the user is not facing the wearable device 100b, and the wearable device 100b outputs via a speaker in the wearable device 100b voice data with a preset volume level that corresponds to the speakerphone function. During execution of the speakerphone function, the preset volume level is high, compared to when an incoming call is received while the speakerphone function is not used.

According to the present embodiment, when the wearable device 100b determines that the user is driving, and receives an incoming call, the wearable device 100b may answer the incoming call via voice recognition. In this case, the wearable device 100b activates a microphone and a voice recognition function for the voice recognition.

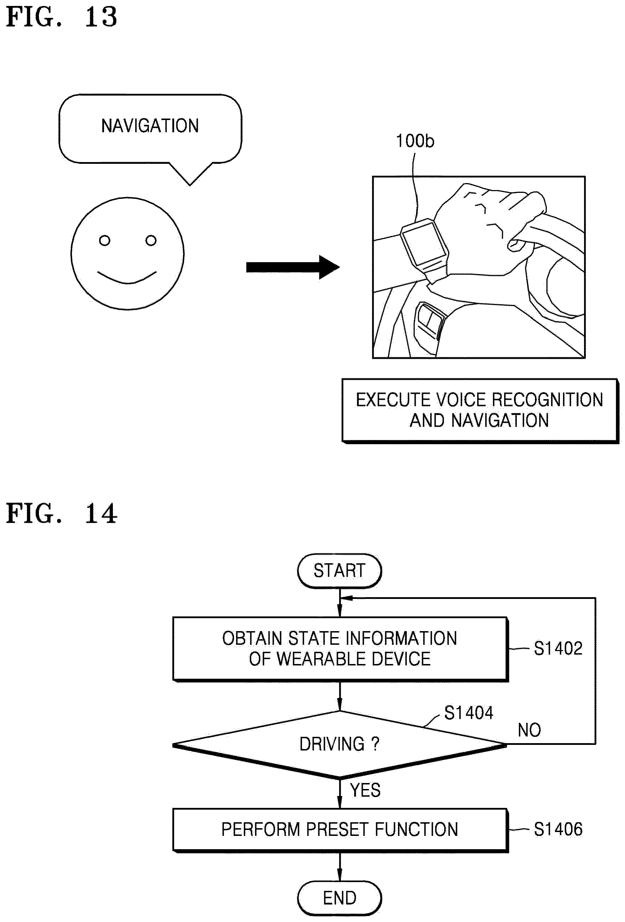

FIG. 13 illustrates an operation of the wearable device 100b, according to another embodiment of the present invention.
in FIG. 13, when the wearable device 100b determines that a user is driving, the wearable device 100b activates a voice recognition function, executes a function or an application of the wearable device 100b by recognizing a voice of the user, or manipulates an executed function or an executed application. For example, as illustrated in in the quote bubble in FIG. 13, when the user says "navigation" while the user is driving, the wearable device 100b recognizes a voice of the user and thus executes a navigation function.

FIG. 14 illustrates a method of controlling the wearable device 100b, according to an embodiment of the present invention.

In FIG. 14, when the wearable device 100b determines that a user is driving, the wearable device 100b performs a preset function. The wearable device 100b obtains state information of the wearable device 100b in step S1402, and determines whether the user who wears the wearable device 100b is driving in step S1404. If the user who wears the wearable device 100b is driving, the wearable device 100b performs the preset function in step S1406. If it is determined that the user is not driving, the process returns to step S1402.

According to embodiments, the preset function may be set by a manufacturer or a designer of the wearable device 100b or may be preset by the user of the wearable device 100b.

According to the present embodiment, when the wearable device 100b determines that the user is driving, the wearable device 100b immediately performs the preset function without a user input.

In another embodiment, when the wearable device 100b determines that the user is driving, the wearable device 100b provides a user interface for receiving an input of selecting whether to execute the preset function, and perform the preset function according to a user input. The user interface for receiving the input of selecting whether to execute the preset function may be provided by a user vocally asking a question and receiving the user input via voice recognition, or by displaying, on the display unit 610, a menu for selecting whether to execute the preset function, and receiving the user input via the displayed menu.

According to the present embodiment, after the wearable device 100b determines that the user is driving, and performs the preset function in steps S1404 and S1406, if the wearable device 100b determines that the user is no longer driving, the wearable device 100b ends the executed preset function. When the wearable device 100b ends the executed preset function, the wearable device 100b automatically ends the executed preset function, or provides a user interface for selecting whether to end the executed preset function and ends the executed preset function according to a user input.

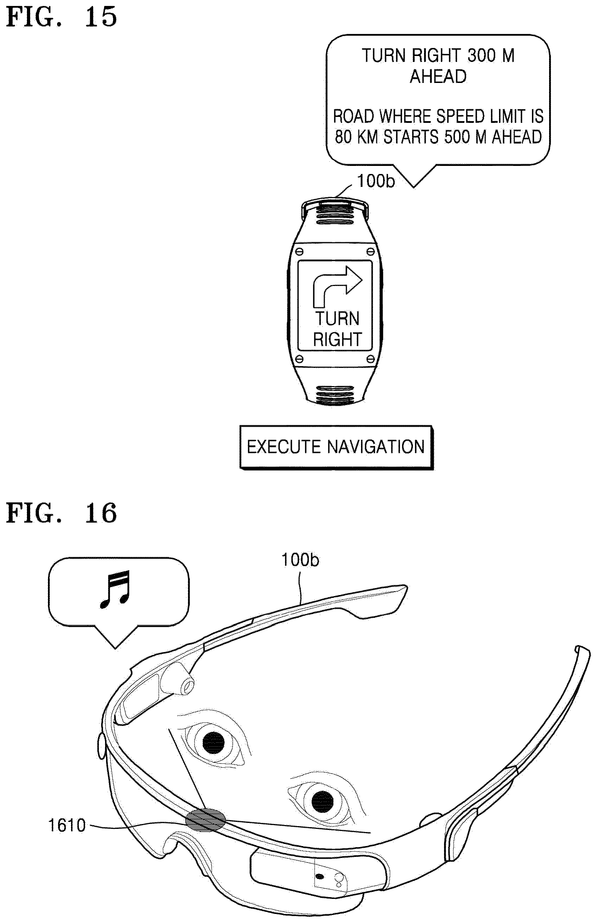

FIG. 15 illustrates an operation in which, when a user is driving, the wearable device 100b performs a preset function, according to an embodiment of the present invention.

In FIG. 15, when the user is driving, the wearable device 100b performs a navigation function. After the wearable device 100b determines that the user is driving, and performs the navigation function, if the wearable device 100b determines that the user is no longer driving, the wearable device 100b automatically ends the navigation function. In this case, the wearable device 100b receives navigation information (e.g., guide information) from a navigation device mounted at a vehicle, displays the received navigation information on a screen of the wearable device 100b, and provides the navigation information by voice to the user. However, one or more embodiments are not limited thereto, and the wearable device 100b may execute a navigation application installed in the wearable device 100b, and uses a function provided by the executed navigation application.

FIG. 16 illustrates an operation in which, when a user is driving, the wearable device 100b performs a preset function, according to another embodiment of the present invention.

In FIG. 16, when the user is driving, the wearable device 100b performs a drowsy-driving prevention function. For example, the wearable device 100b disposes a camera 1610 at a position where the camera 1610 photographs eyes of the user, photographs and determines whether the user is drowsy. For example, if the user blinks his/her eyes over a reference ratio, compared to a normal state, the wearable device 100b detects a blink pattern of the user's eyes, and if a time ratio of a time period in which the user closes the eyes to a time period in which the user opens the eyes is increased, the wearable device 100b determines that the user is drowsy.

To do so, the sensor unit 210 of the wearable device 100b includes the camera 314 disposed at a position where the camera 314 is capable of photographing eyes of a user. For example, when the wearable device 100b is embodied as glasses, the camera 314 is disposed at a temple or a lens of the glasses so as to face the eyes of the user.

When the wearable device 100b determines that the user is drowsy, the wearable device 100b performs the drowsy-driving prevention function by outputting sound or by generating vibration.

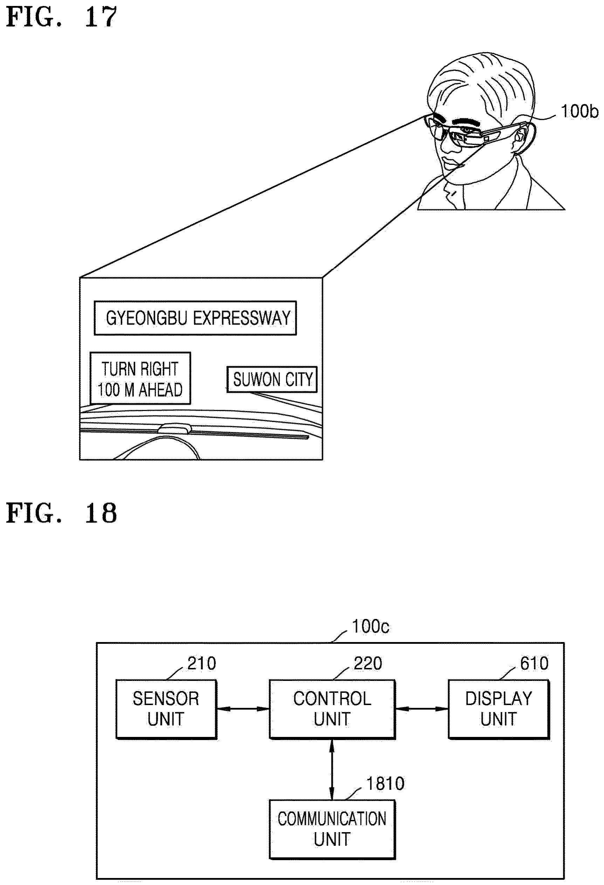

FIG. 17 illustrates an operation in which, when a user is driving, the wearable device 100b performs a preset function, according to another embodiment of the present invention.

If the wearable device 100b according to the present embodiment is embodied as glasses or a helmet, when the user is driving, the wearable device 100b provides vehicle information, navigation information, and traffic information, for example, in the form of augmented reality on the display unit 610 in front of the user. For example, as illustrated in FIG. 17, the wearable device 100b displays the navigation information in the form of the augmented reality. The augmented reality may be realized by displaying a three-dimensional (3D) image on the display unit 610.

FIG. 18 illustrates a structure of the wearable device 100c according to an embodiment of the present invention.

The wearable device 100c according to the present embodiment includes the sensor unit 210, the control unit 220, the display unit 610, and a communication unit 1810.

The sensor unit 210 obtains state information of the wearable device 100c and includes at least one sensor capable of obtaining the state information of the wearable device 100c.

The control unit 220 controls general operations of the wearable device 100c. The control unit 220 according to the present embodiment determines whether a user who wears the wearable device 100c is driving, based on the state information output from the sensor unit 210. If the user is driving, the control unit 220 changes setting of at least one function of the wearable device 100c, or performs the at least one function of the wearable device 100c.

The display unit 610 displays the state information of the wearable device 100c or an execution screen of an application, for example. The display unit 610 includes an LCD device or an organic electroluminescent display device, for example, and may be embodied in various positions and forms, according to a type of the wearable device 100c.

The communication unit 1810 communicates with an external device such as by exchanging data, a control signal, or a state signal with the external device. The communication unit 1810 provides a plurality of communications, and types of the communications provided by the communication unit 1810 may vary.

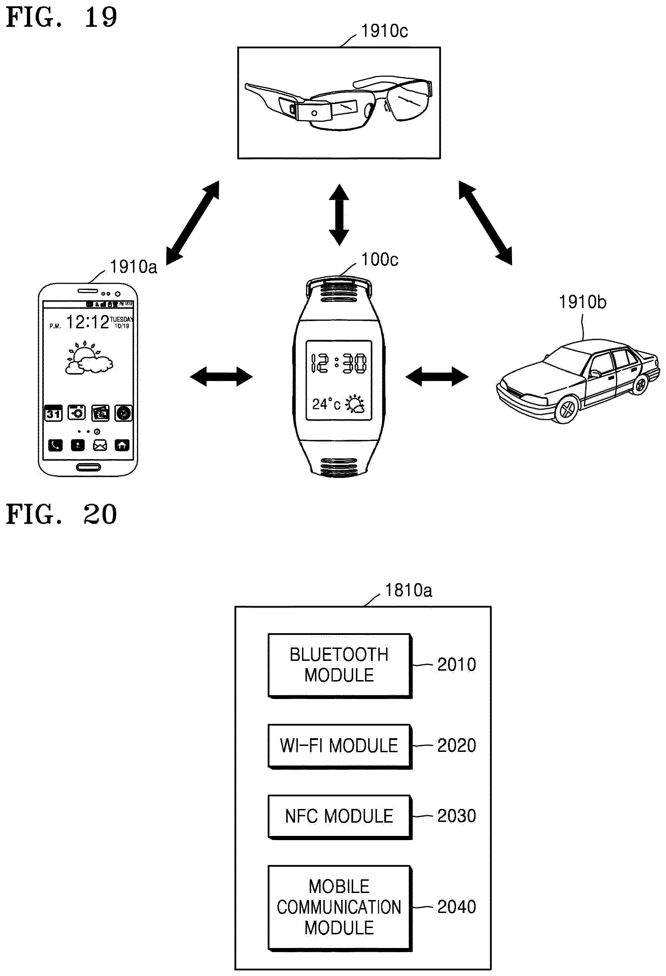

FIG. 19 illustrates an example in which the wearable device 100c according to the present embodiment communicates with external devices 1910a, 1910b, and 1910c.

The external devices 1910a, 1910b, and 1910c indicates one or more of a vehicle 1910b in which a user is in, a smartphone 1910a, a tablet PC, and another wearable device 1910c, or a combination thereof. While the wearable device 100c communicates with the external devices 1910a, 1910b, and 1910c, the wearable device 100c controls, provides information to, or usesuses at least one of the external devices 1910a, 1910b, and 1910c. Throughout the present specification, the vehicle 1910b may indicate an entire vehicle, or a computing device mounted in the vehicle. The computing device may be mounted in the vehicle during the manufacture of the vehicle by a vehicle manufacturing company, or may be manufactured by another manufacturer other than the vehicle manufacturing company and mounted in the vehicle by a user. The computing device monitors operations of the vehicle, and electrically controls the operations of the vehicle.

FIG. 20 illustrates a structure of a communication unit 1810a, according to an embodiment of the present invention. The communication unit 1810a may be the communication unit 1810 illustrated in FiG. 18.

The communication unit 1810a according to the present embodiment includes at least one of a Bluetooth^{®} module 2010, a Wi-Fi module 2020, an NFC module 2030, and a mobile communication module 2040, or a combination thereof. The mobile communication module 2040 transmits and receives a call and a text message by using a mobile communication network, and performs data communication by using the mobile communication network. The mobile communication network uses at least one of second generation (2G) mobile communication including Code Division Multiple Access (CDMA), Global system for Mobile communication (GSM), or Personal Digital Cellular (PCD), third generation (3G) mobile communication including International Mobile Telecommunication 2000 (IMT-2000), Wideband Code Division Multiple Access (W-CDMA), or Code Division Multiple Access 2000 (CDMA2000), and fourth generation (4G) mobile communication including Long Term Evolution (LTE) or Long Term Evolution advanced (LTE-A).

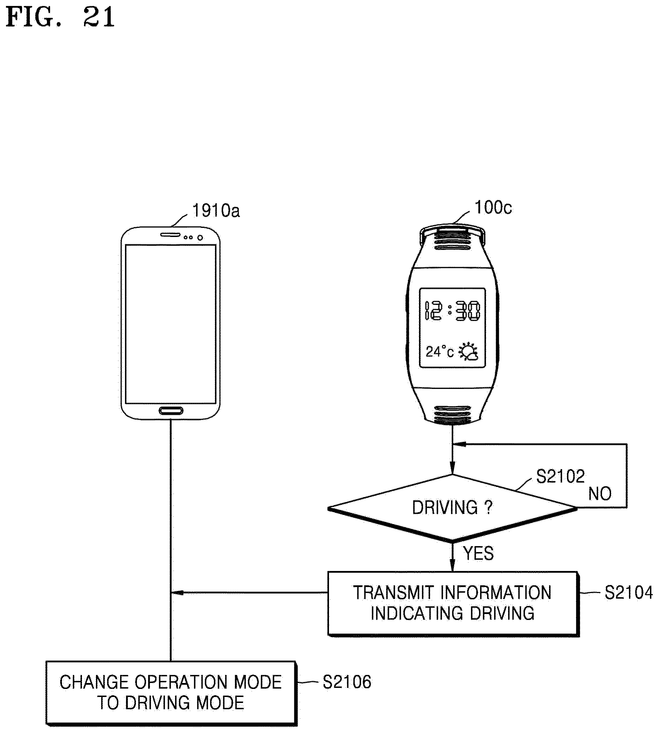

FIG. 21 illustrates a method of controlling the wearable device 100c, according to an embodiment of the present invention.

When the wearable device 100c according to the present embodiment determines that a user who wears the wearable device 100c is driving in step S2102, the wearable device 100c transmits information indicating driving to the external device 1910a in step S2104. The external device 1910a may be a smartphone or a tablet PC, for example.

According to the present embodiment, the wearable device 100c transmits, to the external device 1910a, the information indicating driving, and a control signal for changing an operation mode of the external device 1910a. The wearable device 100c controls the external device 1910a to change a mode of the external device 1910a to a driving, power-saving, or notification prevention mode, for example.

According to the present embodiment, when the external device 1910a receives the information indicating driving from the wearable device 100c, the external device 1910a changes the operation mode of the external device 1910a to a pre-determined mode to be performed when the user is driving in step S2106. For example, when the external device 1910a receives the information indicating driving from the wearable device 100c, the external device 1910a changes the operation mode of the external device 1910a to the driving mode, the power-saving mode, the notification prevention mode, for example.

According to the present embodiment, when the operation mode of the external device 1910a is changed due to the wearable device 100c, the external device 1910a causes the wearable device 100c to perform some of the operations of the external device 1910a. For example, when the external device 1910a is notified, by the wearable device 100c, that the user is driving, and is controlled to change its operation mode, the external device 1910a operates in such a manner that the wearable device 100c provides a notification instead of the external device 1910a.

According to another embodiment, when the external device 1910a receives a control signal for changing an operation mode from the wearable device 100c, the external device 1910a changes its operation mode according to the received control signal.

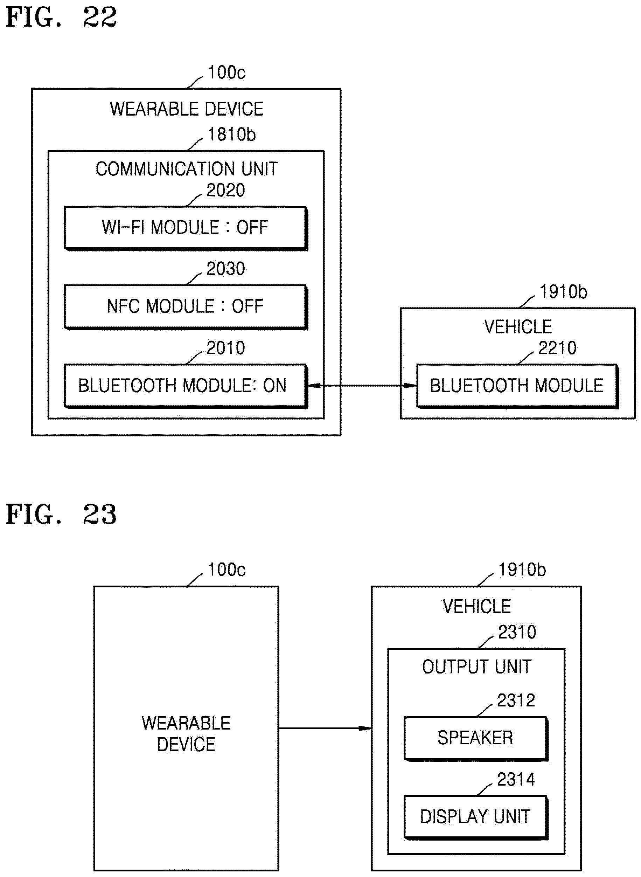

FIG. 22 illustrates the wearable device 100c and the external device 1910b, according to an embodiment of the present invention.

In FIG. 22, when the wearable device 100c determines that a user who wears the wearable device 100c is driving, the wearable device 100c deactivates some communication modules included in the communication unit 1810b and activates other communication modules in the communication unit 1810b. For example, when the communication unit 1810b includes the Wi-Fi module 2020, the NFC module 2030, and the Bluetooth^{®} module 2010, if the wearable device 100c determines that the user of the wearable device 100c is driving, the wearable device 100c deactivates the Wi-Fi module 2020 and the NFC module 2030 of the wearable device 100c, and activates the Bluetooth^{®} module 2010. According to the present embodiment, the external device 1910b includes a Bluetooth module 2210 and is a vehicle, and the Bluetooth^{®} module 2210 of the vehicle 1910b communicates with the Bluetooth^{®} module 2010 of the wearable device 100c.

According to the present embodiment, when the wearable device 100c determines that the user of the wearable device 100c is driving, the wearable device 100c deactivates communication modules that provide communications that are seldom used during driving, thereby decreasing power consumption of the wearable device 100c.

FIG. 23 illustrates the wearable device 100c and the external device 1910b, according to another embodiment of the present invention.

In FIG. 23, when the wearable device 100c determines that the user is driving, the wearable device 100c uses an output unit 2310 included in the external device 1910b that is a vehicle. For example, when the wearable device 100c determines that the user is driving, the wearable device 100c uses a speaker 2312 and a display unit 2314 included in the output unit 2310 of the vehicle 1910b. For example, the wearable device 100c outputs music, sound notification, and a navigation guide voice by using the speaker 2312 included in the vehicle 1910b, and displays a navigation screen, content of a text message, and notification content on the display unit 2314 included in the vehicle 1910b.

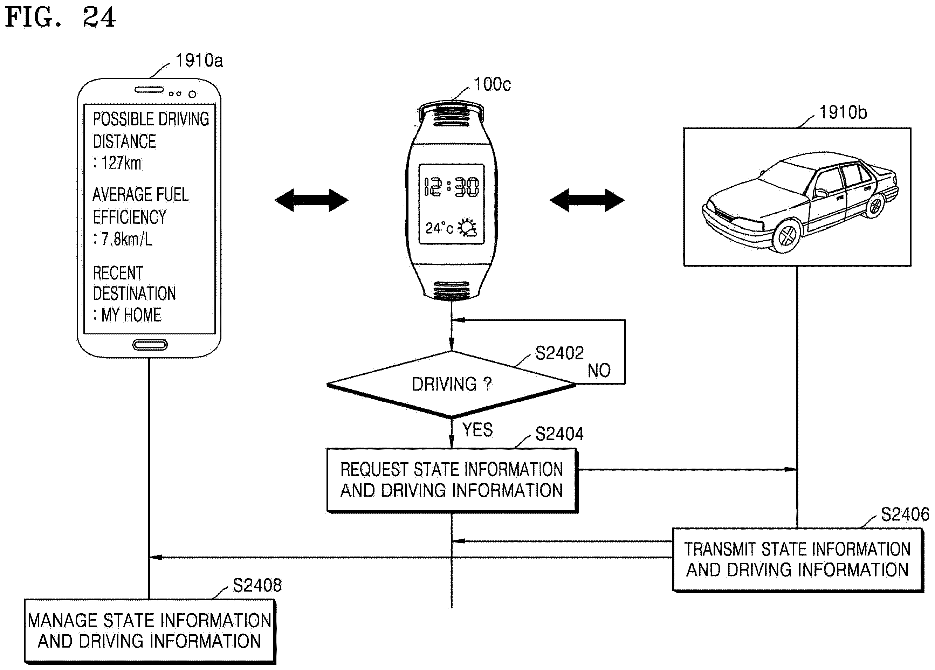

FIG. 24 illustrates a method of controlling the wearable device 100c, according to another embodiment of the present invention.

When the wearable device 100c according to FIG. 24 determines that a user who wears the wearable device 100c is driving, the wearable device 100c provides information collected from a vehicle to a smartphone or a tablet PC, for example. In step S2402, when the wearable device 100c determines that the user is driving, the wearable device 100c requests the vehicle 1910b for state information and driving information in step S2404. For example, the state information includes identification information, a vehicle model, an amount of remaining fuel, a possible driving distance, a fuel efficiency, and a speed of the vehicle 1910b. The driving information includes a driving distance and a destination, for example.

In an embodiment, the request for the state information and the driving information, which is transmitted from the wearable device 100c to the vehicle 1910b, includes an information request signal and information regarding a device that will provide the information, such as a type of the device, an identifier of the device, and an address for establishing communication. In another embodiment, the request for the state information and the driving information, which is transmitted from the wearable device 100c to the vehicle 1910b, includes the information request signal, a type of the requested information, and the information regarding the device that will provide the information.

When the vehicle 1910b receives the request for the state information and the driving information, the vehicle 1910b transmits the state information and the driving information to at least one of the wearable device 100c, the smartphone 1910a, and the tablet PC, or a combination thereof in step S2406.

The device that has received the state information and the driving information manages the state information and the driving information in step S2408. For example, the smartphone 1910a generates a vehicle management note by using the state information and the driving information, as shown in FIG. 24.

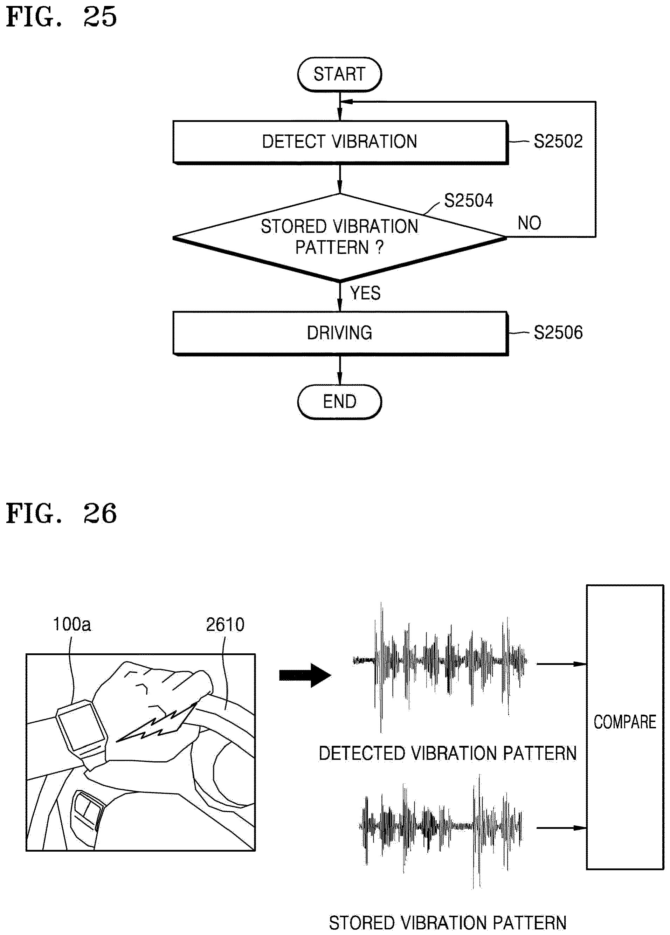

FIG. 25 illustrates a method of determining whether a user of the wearable device 100a as shown in FIG. 2 is driving, according to an embodiment of the present invention.

The wearable device 100a detects vibration in step S2502. According to the present embodiment, the sensor unit 210 of the wearable device 100a includes an acceleration sensor, and detects the vibration by using a sensing value detected by the acceleration sensor.

The wearable device 100a compares the detected vibration with a pre-stored vibration pattern in step S2504. The pre-stored vibration pattern indicates a pattern of the vibration of a vehicle that is generated due to an engine of the vehicle and a surface of a road. When a user drives the vehicle while the user wears the wearable device 100a, the vibration of the vehicle is transmitted to the wearable device 100a via a body of the user. When the user holds a steering wheel while the user is driving, the vibration of the vehicle is transmitted to the wearable device 100a via the steering wheel and the body.

When the detected vibration is equal to or similar to the pre-stored vibration pattern, the wearable device 100a determines that the user is driving in step S2506). The fact that the detected vibration is equal to or similar to the pre-stored vibration pattern indicates that a difference between the detected vibration and the pre-stored vibration pattern is equal to or less than a preset reference value. According to the present embodiment, when a value of correlation between the detected vibration and the pre-stored vibration pattern is equal to or greater than the preset reference value, the wearable device 100a determines that the user is driving.

FIG. 26 illustrates a method of determining whether a user of the wearable device 100a is driving, according to an embodiment of the present invention.

In FIG. 26, the wearable device 100a detects vibration, compares the vibration with a stored vibration pattern, and according to the comparison result, determines whether the user of the wearable device 100a is driving. For example, as illustrated in FIG. 26, when the user who wears the wearable device 100a holds a steering wheel 2610 of a vehicle, vibration of the vehicle is transmitted via the steering wheel 2610 and is detected by the wearable device 100a.

A strength of the vibration that is transmitted via the steering wheel 2610 of the vehicle is inherently higher than a strength of vibration that is transmitted to a passenger other than a driver. According to the present embodiment, the wearable device 100a determines whether the user is driving by considering not only a pattern of the detected vibration but also the strength of the vibration. For example, even if the pattern of the detected vibration is equal to or similar to the pre-stored vibration pattern, when the strength of the vibration is less than a reference value, the wearable device 100a determines that the user is not driving, and where the pattern of the detected vibration is equal to or similar to the pre-stored vibration pattern, and the strength of the vibration is equal to or greater than the reference value, the wearable device 100a determines that the user is driving.

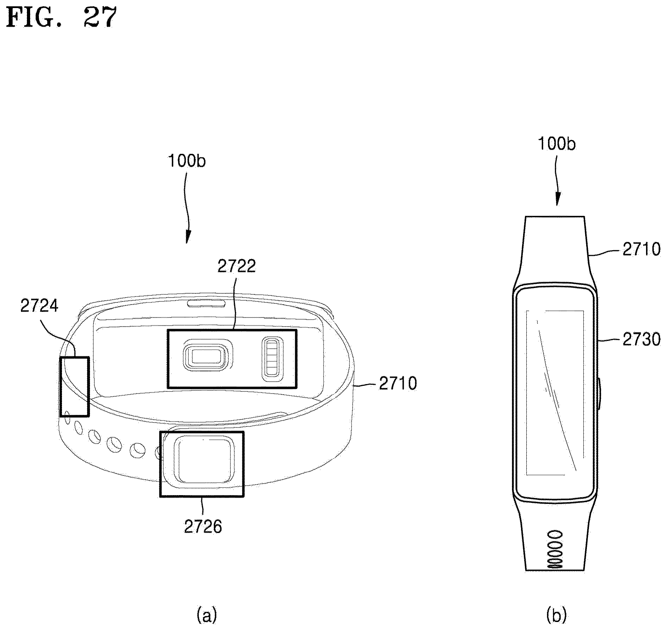

FIGs. 27(a)-(b) illustrate a structure of the wearable device 100b, according to an embodiment of the present invention.

In FIGs. 27(a)-(b), the wearable device 100b is embodied in a smart watch. In this case, a sensor of the sensor unit 210 may be disposed at a rear surface of a watch plate 2730, at an inner circumferential surface of a watch band 2710, or at a connecting part 2726. For example, a heart rate sensor, a temperature sensor, a sweat sensor, a blood pressure sensor, or a proximity sensor may be disposed below a rear surface 2722 of a watch plate 2730, or at an inner circumferential surface 2724 of the watch band 2710. A conductive sensor, a Hall sensor, or a magnetic sensor capable of sensing a connection state may be disposed at the connecting part 2726. A touchscreen may be disposed at the front surface of the watch plate 2730. In addition, an acceleration sensor, a gyroscope sensor, an illumination sensor, a magnetic field sensor, for example may be disposed at various positions.

In the wearable device 100b formed as the smart watch, the watch band 2710 may be detached from the watch plate 2730. In this case, a sensor may be disposed at a connected part of either the watch band 2710 or the watch plate 2730 so as to detect a connection between the watch band 2710 and the watch plate 2730.

The control unit 220 of the smart watch detects vibration by using an acceleration sensor, and detects movement of a user by using a gyroscope sensor.

The control unit 220 of the smart watch determines whether the smart watch is or is not in a worn state (i.e., is or is not being worn), for example, based on whether the connecting part 2726 is connected and a detection value of a bio sensor such as a heart rate sensor.

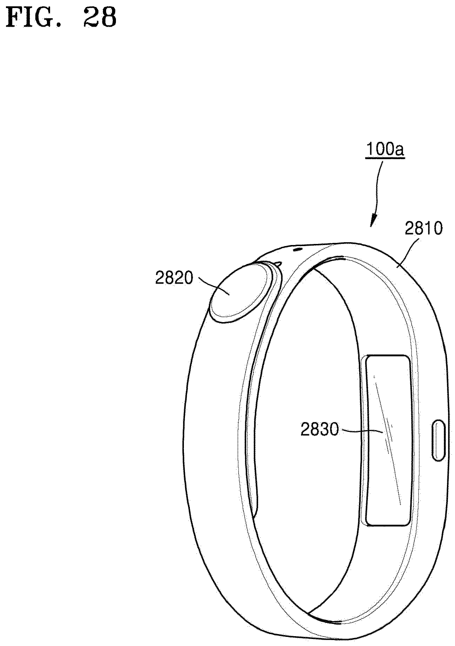

FIG. 28 illustrates a structure of the wearable device 100a, according to an embodiment of the present invention.

In FIG. 28, the wearable device 100a is embodied in a smart bracelet (or a smart band) A sensor may be disposed at a body 2810, a connecting part 2820, or an inner circumferential surface 2830, for example. The sensor disposed at the body 2810 may include an acceleration sensor, a gyroscope sensor, a motion sensor, a magnetic field sensor, or a position detection module, the sensor disposed at the connecting part 2820 may include a conductive sensor, a Hall sensor, or a magnetic sensor for sensing connection, and the sensor disposed at the inner circumferential surface 2830 may include a temperature sensor or a heart rate sensor.

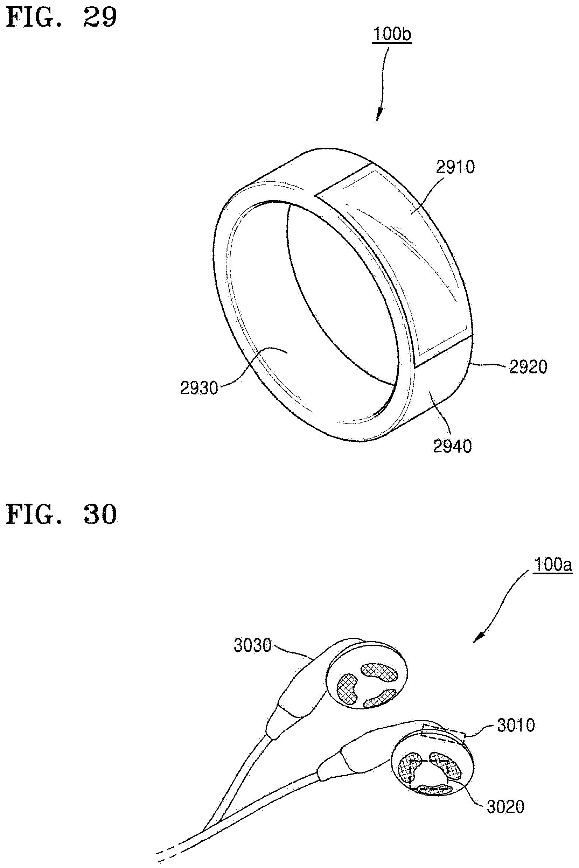

FIG. 29 illustrates a structure of the wearable device 100b, according to another embodiment of the present invention.

In FIG. 29, the wearable device 100b is embodied in a smart ring, and may be disposed at a display unit 2910, a body 2920, an inner circumferential surface 2930, or an outer circumferential surface 2940, for example. A touchscreen may be disposed at the display unit 2910, a temperature sensor or a heart rate sensor may be disposed at the inner circumferential surface 2930, an acceleration sensor, a gyroscope sensor, a magnetic field sensor, a position detection module, a motion sensor, or an illumination sensor may be disposed at the body 2920 of the smart ring, and touch sensor may be disposed at the outer circumferential surface 2940.

FIG. 30 illustrates a structure of the wearable device 100a, according to another embodiment of the present invention.

In FIG. 30, the wearable device 100a is embodied in earphones, and a sensor may be disposed at an outer circumferential part 3010 or a vibration plate 3020, for example. That is, a heart rate sensor may be disposed at the outer circumferential part 3010, a temperature sensor may be disposed at the vibration plate 3020, and an acceleration sensor, a gyroscope sensor, or a magnetic field sensor may be disposed at the outer circumferential part 3010 or a body 3030 of the headphones.

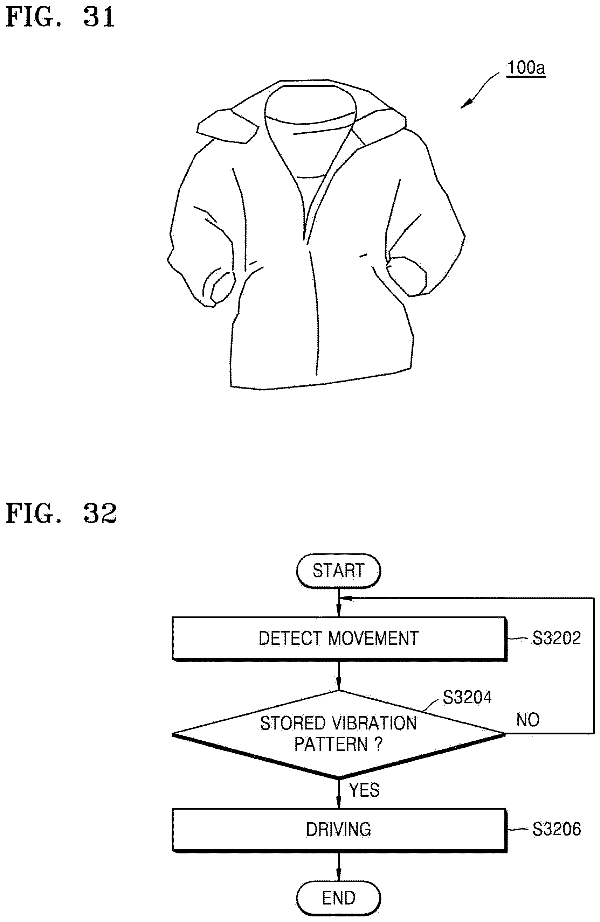

FIG. 31 illustrates a structure of the wearable device 100a, according to another embodiment of the present invention.

In FIG. 31, the wearable device 100a is embodied in clothes. A temperature sensor or a heart rate sensor may be disposed at an inner side, and an acceleration sensor, a gyroscope sensor, a position detection module, or a magnetic field sensor may be disposed at various positions.

FIG. 32 illustrates a method of determining whether a user of the wearable device 100a is driving, according to an embodiment of the present invention.

In FIG. 32, the wearable device 100a determines whether the user is driving, based on detected movement.

The wearable device 100a detects the movement in step S3202, in the form of a movement pattern or a rotation angle, for example. The movement may be detected by using an acceleration sensor, a gyroscope sensor, or a motion sensor included in the sensor unit 210 of the wearable device 100a.

The wearable device 100a compares the detected movement with a stored movement pattern in step S3204, by calculating a difference between the detected movement and the stored movement pattern, or by performing a correlation calculation.

When the detected movement and the stored movement pattern are equal to or similar to each other, the wearable device 100a determines that the user is driving in step S3206.

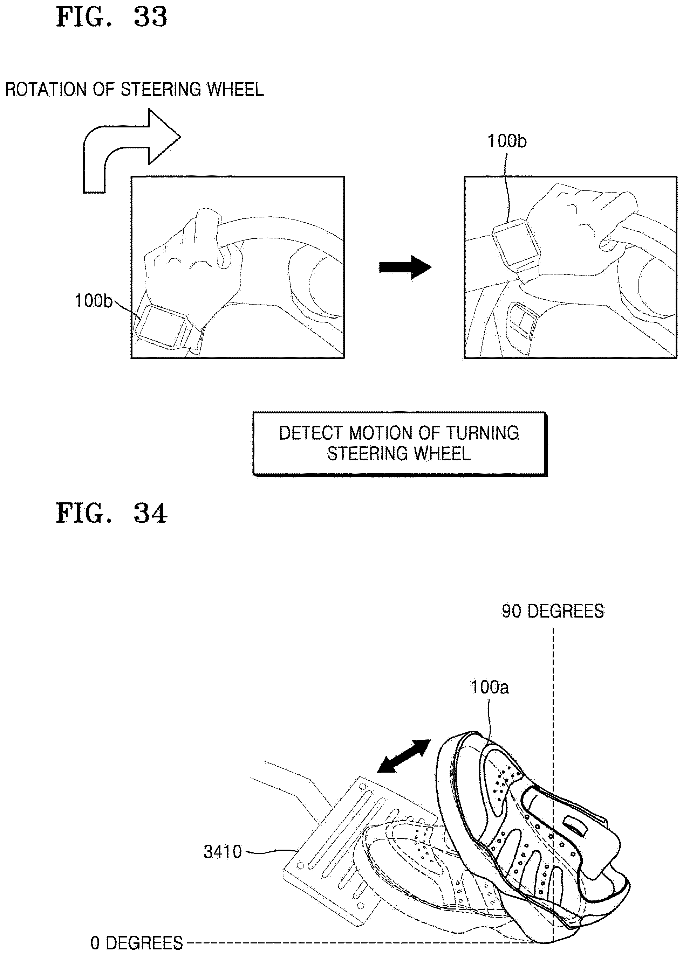

FIG. 33 illustrates a method of determining whether a user is driving, according to an embodiment of the present invention.

In FIG. 33, the wearable device 100b determines that the user is driving, by detecting a motion of turning the steering wheel. As illustrated in FIG. 33, when the user is driving, a large turning motion of the steering wheel occurs. The motion of turning the steering wheel causes the wearable device 100b to move along a circular shape of the steering wheel. The wearable device 100b detects a pattern of the motion by using an acceleration sensor, a gyroscope sensor, or a motion sensor, and if the detected form of the motion is similar to a pre-stored motion of turning the steering wheel, the wearable device 100b determines that the user is driving. According to the present embodiment, the wearable device 100b detects a rotation angle by using the acceleration sensor, and if the rotation angle is equal to or similar to a pre-stored rotation angle, the wearable device 100b determines that the user is driving.

According to the present embodiment, when a motion with a form equal to or similar to the pre-stored rotation angle is detected for more than a reference time period or more than a reference number of times, the wearable device 100b determines that the user is driving.

According to the present embodiment, the wearable device 100b determines that the user is driving, in consideration of a detected vibration and a detected motion. For example, when the detected vibration is similar to a pre-stored vibration pattern, and the detected motion is similar to the pre-stored motion pattern, the wearable device 100b determines that the user is driving.

FIG. 34 illustrates a method of determining whether a user is driving, according to an embodiment of the present invention.

In FIG. 34, the wearable device 100a is embodied in a shoe that detects a movement of stepping on or pressing a vehicle pedal 3410, and determines that the user is driving. When the user repeat the movement of stepping on or pressing the vehicle pedal 3410 while driving, as illustrated in FIG. 34, a rotational movement in up and down directions from a rear and bottom portion of an outsole of the shoe occurs at the wearable device 100a formed as the shoe. The rotational movement in the up and down directions occurs within an angle. For example, when the user is driving, the rotational movement in the up and down directions of the wearable device 100a may be detected within a range of zero degrees to 90 degrees, in which case the wearable device 100a formed as the shoe determines that the user is driving. Information about the rotational movement in the up and down directions may be pre-stored in the wearable device 100a.

According to the present embodiment, when the rotational movement in the up and down directions is detected for more than a reference time period or more than a reference number of times, the wearable device 100a formed as the shoe determines that the user is driving.

According to the present embodiment, the sensor unit 210 of the wearable device 100a includes an acceleration sensor or a gyroscope sensor, by which the wearable device 100a detects the rotational movement in the up and down directions.

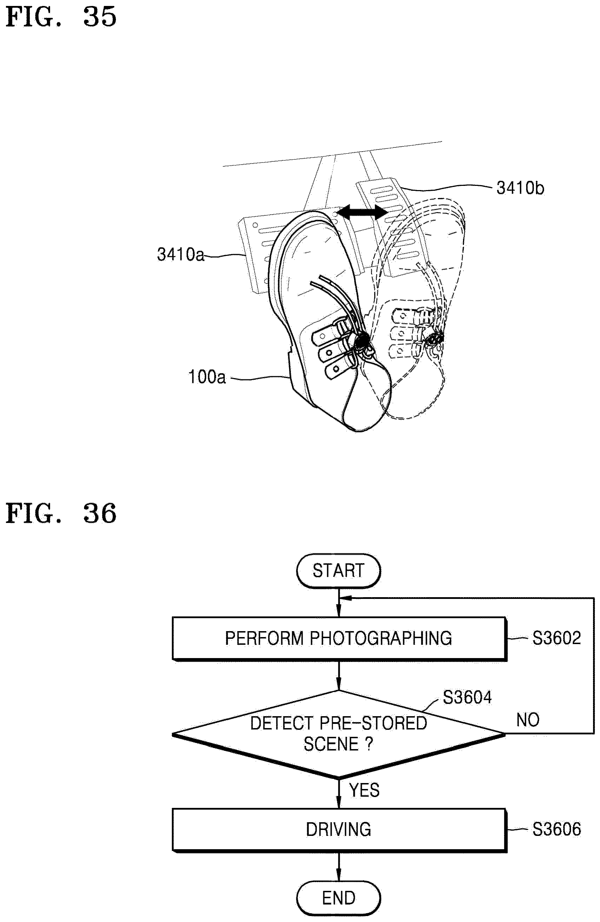

FIG. 35 illustrates a method of determining whether a user is driving, according to another embodiment of the present invention.

In FIG. 35, the wearable device 100a is embodied in a shoe thatdetects a movement between a plurality of vehicle pedals 3410a and 3410b and thus determines that the user is driving. While the user is driving, the user's motion of moving between the plurality of vehicle pedals 3410a and 3410b occurs, and as illustrated in FIG. 35, a rotational movement in right and left directions from a rear and bottom portion of an outsole of the shoe occurs at the wearable device 100a formed as the shoe. When the user is driving, the rotational movement in the right and left directions occurs within an angle. For example, when the user is driving, the rotational movement in the right and left directions of the wearable device 100a may be detected within 90 degrees, in which case the wearable device 100a formed as the shoe determines that the user is driving. Information about the rotational movement in the right and left directions may be pre-stored in the wearable device 100a.

According to the present embodiment, when the rotational movement in the right and left directions is detected for more than a reference time period or more than a reference number of times, the wearable device 100a formed as the shoe determines that the user is driving.

According to the present embodiment, the sensor unit 210 of the wearable device 100a includes an acceleration sensor or a gyroscope sensor, and detects rotational motion in the right and left directions by using the acceleration sensor or the gyroscope sensor.

FIG. 36 illustrates a method of determining whether a user is driving, according to an embodiment of the present invention.

In FIG. 36, the sensor unit 210 of the wearable device 100a includes a camera. The wearable device 100a determines that the user is driving when a scene that is pre-stored in the wearable device 100a is detected.

The wearable device 100a performs photographing by using a camera in step S3602. A photographed scene may vary according to a position of the camera at the wearable device 100a, and a state of the user. For example, when the wearable device 100a is embodied in glasses and the camera is disposed in a front part of the glasses, the wearable device 100a photographs a scene in a viewing direction of the user. As another example, when the wearable device 100a is embodied in a wristwatch or a bracelet, and the camera is disposed at a watch band, the wearable device 100a photographs a scene in a left direction or a right direction of the user.

The wearable device 100a determines whether the pre-stored scene is detected from the photographed scene in step S3604. The pre-stored scene may be highly detectable while the user is driving, such as the scene of a steering wheel, a set of gauges inside the vehicle, or a side mirror.

The comparison between the pre-stored scene and the photographed scene may be performed by using various algorithms for scene detection. For example, the pre-stored scene shows a circular form of the set of gauges and a shape of gradations, and the wearable device 100a detects the circular form and the shape of gradations from the photographed scene. For the comparison of shapes, a correlation technique may be used.

When the pre-stored scene is detected, the wearable device 100a determines that the user is driving in step S3606.

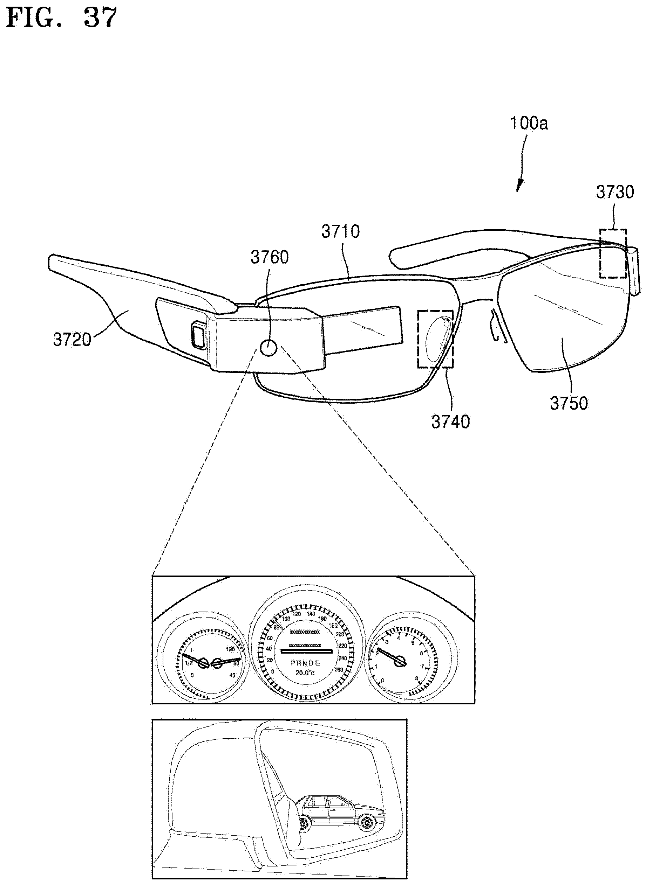

FIG. 37 illustrates a method of determining whether a user is driving, according to another embodiment of the present invention.

In FIG. 37, the wearable device 100a is embodied in glasses (or smart glasses), and a sensor may be disposed at a glass rim 3710, a glass temple 3720, a part of a glass temple which contacts a user's temple 3730, a nose pad 3740, and a glass lens 3750, for example. Various sensors may be disposed at various positions, such as a touch sensor disposed at the glass rim 3710 or the glass temple 3720, a pulse sensor disposed at the part of the glass temple which contacts the user's temple 3730, an acceleration sensor or a touch sensor disposed at the nose pad 3740, or an iris sensor disposed at the glass lens 3750. According to the present embodiment, a camera 3760 may be disposed at a preset position of the glass temple 3720 or the glass rim 3710.

In FIG. 37, the wearable device 100a formed as smart glasses captures an image in a viewing direction of the user by using the camera 3760, and the captured image is analyzed to determine whether the user is driving. For example, as illustrated in FIG. 37, an image of the set of gauges of the vehicle and an image of the side mirror are pre-stored in the wearable device 100a. When the wearable device 100a detects the captured image which is similar to at least one of the pre-stored images, the wearable device 100a determines that the user is driving.

According to the present embodiment, the image of the set of gauges of the vehicle may be stored with respect to each of models of the vehicle. For example, each of an image of a set of gauges of a vehicle model A of an A company, and an image of a set of gauges of a vehicle model B of a B company, may be stored in the wearable device 100a. The wearable device 100a recognizes a model of a vehicle, based on an image of the set of gauges of the vehicle.

Similarly, the image of the side mirror may be stored with respect to each of the models of the vehicle. The wearable device 100a recognizes a model of a vehicle, based on an image of a side mirror of the vehicle.

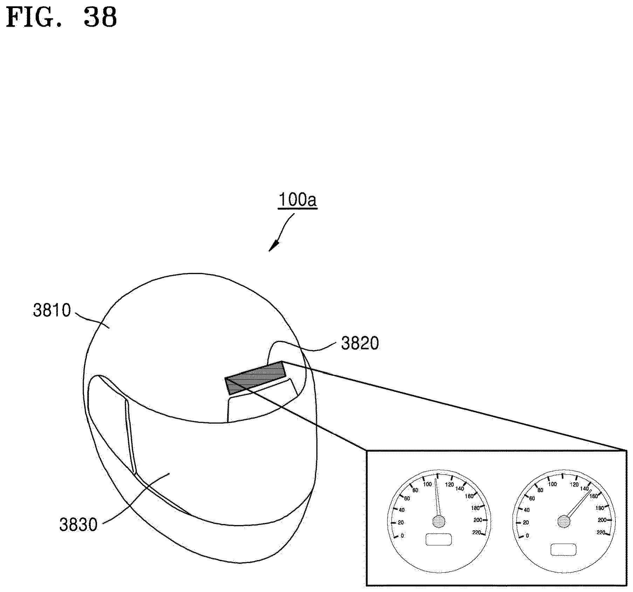

FIG. 38 illustrates a method of determining whether a user is driving, according to another embodiment of the present invention.

In FIG. 38, the wearable device 100a is embodied in a helmet, and a sensor is disposed at a helmet shell 3810, a liner inside the helmet 100a, or a shield 3830. For example, a touch sensor is disposed at the helmet shell 3810 or the shield 3830, a pulse sensor is disposed at the liner, an acceleration sensor or a gyroscope sensor is disposed at the helmet shell 3810, the shield 3830, or the liner, and an iris sensor is disposed at the shield 3830. A camera 3820 is disposed at a preset position of the helmet shell 3810 or the shield 3830.

In the embodiment of FIG. 38, an image in a viewing direction of the user may be captured by using the camera 3820, and the captured image is analyzed, and is used to determine whether the user is driving may. For example, as illustrated in FIG. 38, an image of a set of gauges of a motorcycle, and an image of a side mirror are pre-stored in the wearable device 100a, which determines that the user is driving when the wearable device 100a detects at least one of the pre-stored images from the captured image.

According to the present embodiment, the image of the set of gauges of the motorcycle may be stored with respect to each of models of the motorcycle. For example, each of an image of a set of gauges of a motorcycle model A of an A company, and an image of a set of gauges of a motorcycle model B of a B company, may be stored in the wearable device 100a. The wearable device 100a recognizes a model of a motorcycle, based on an image of the set of gauges of the motorcycle.

Similarly, the image of the side mirror may be stored with respect to each of the models of the motorcycle. The wearable device 100a recognizes a model of a motorcycle, based on an image of a side mirror of the motorcycle.

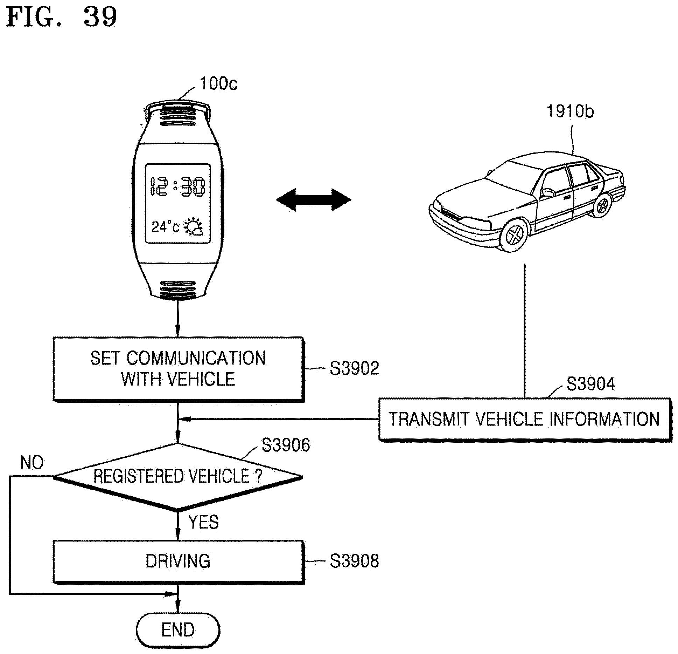

FIG. 39 illustrates a method of determining whether a user is driving, according to an embodiment of the present invention.

In FIG. 39, when the wearable device 100c enters the vehicle 1910b registered to a wearable device, the wearable device 100c sets communication with the vehicle 1910b in step S3902. For example, the wearable device 100c establishes a wireless communication channel with the vehicle 1910b.

The wearable device 100c receives vehicle information from the vehicle 1910b in step S3904. The vehicle information includes a model of the vehicle 1910b, a unique number of the vehicle 1910b, state information of the vehicle 1910b, and driving information of the vehicle 1910b, for example. The unique number of the vehicle 1910b includes numbers of a license plate or a serial number of the vehicle 1910b. Throughout the specification, the vehicle 1910b may be a computing device embedded in the vehicle 1910b, in which case the vehicle information may be device information about the device that is embedded in the vehicle 1910b. The device information includes information about an identification value, specification, a network state, or an application executed in the device, for example. However, one or more embodiments are not limited thereto. According to the present embodiment, when the communication is set between the wearable device 100c and the vehicle 1910b, the vehicle information is automatically transmitted from the vehicle 1910b to the wearable device 100c. According to another embodiment, when a request is transmitted from the wearable device 100c to the vehicle 1910b, the vehicle information is transmitted from the vehicle 1910b to the wearable device 100c.

If it is determined that the vehicle 1910b is a registered vehicle in step S3906, the wearable device 100c determines that the user is driving in step S3908. When the wearable device 100c receives the vehicle information, the wearable device 100c compares pre-stored vehicle information with the received vehicle information, and thus determines whether the vehicle 1910b is the registered vehicle. The vehicle information used in determining whether the vehicle 1910b is the registered vehicle includes numbers of a license plate and a serial number of the vehicle 1910b, for example. When the communication is set between the wearable device 100c and the vehicle 1910b, the wearable device 100c receives the vehicle information, such as the device information about the computing device embedded in the vehicle 1910b, from the vehicle 1910b, and determines whether the vehicle 1910b is registered based on the received vehicle information.

The wearable device 100c sets the communication with the vehicle 1910b by using the vehicle information of the vehicle 1910b. For example, in order to set Bluetooth^{®} communication with the vehicle 1910b, the wearable device 100c detects the vehicle 1910b by receiving the vehicle information broadcasted from the vehicle 1910b, and accesses the vehicle 1910b by using the received vehicle information.

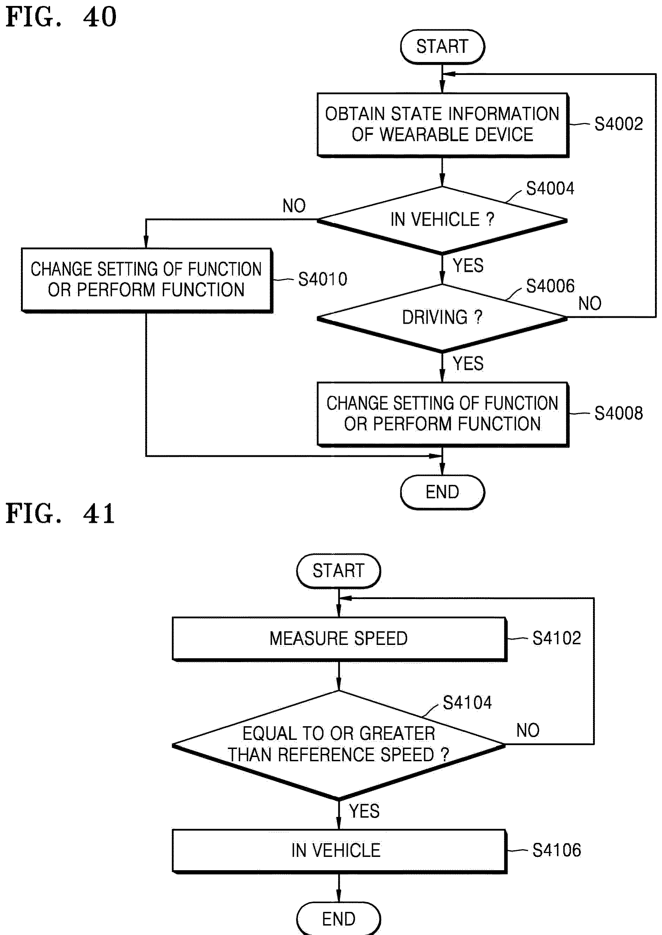

FIG. 40 illustrates a method of controlling the wearable device 100a, according to an embodiment of the present invention.

In FIG. 40, to determine whether a user is driving, the wearable device 100a determines whether the user is in a vehicle, and if the wearable device 100a determines that the user is in the vehicle, the wearable device 100a determines whether the user is driving.

The wearable device 100a obtains state information of the wearable device 100a in step S4002, such as by using various sensors formed in the wearable device 100a, as previously discussed.

The wearable device 100a determines, by using the state information, whether the user of the wearable device 100a is in the vehicle in step S4004. For example, when a vibration having a pre-stored pattern is detected, or when communication is set with the vehicle, the wearable device 100a determines that the user is in the vehicle.

When the wearable device 100a determines that the user is in the vehicle, the wearable device 100a determines whether the user is driving in step S4006. For example, when the wearable device 100a detects a steering wheel turning motion, a rotational movement of stepping on or pressing a vehicle pedal, or a vehicle that is registered to the wearable device 100a, the wearable device 100a determines that the user is driving.

When the wearable device 100a determines that the user is driving, the wearable device 100a changes the setting of a function of the wearable device 100a or performs a preset function in step S4008.

When the wearable device 100a determines that the user is not in the vehicle in step S4004, the wearable device 100a changes the setting of a function or performs a function in step S4010. For example, when the wearable device 100a determines that the user is not in the vehicle, the wearable device 100a performs a user interface for controlling a sound output function of a radio or an optical disc player of the vehicle, or a user interface for controlling navigation, for example. When the wearable device 100a determines that the user is not in the vehicle, the wearable device 100a changes the communication setting by deactivating Wi-Fi and activating Bluetooth^{®}, for example.

FIG. 41 illustrates a method of determining whether a user is in a vehicle, the method being performed by the wearable device 100a, according to an embodiment of the present invention.

In FIG. 41, the wearable device 100a determines whether the user is in the vehicle, based on a speed of the vehicle. The wearable device 100a measures the speed in step S4102 of the vehicle by calculating a travel distance per unit of time, based on a location detected by a global positioning system (GPS) module installed in the wearable device 100a. As another example, the speed of the wearable device 100a may be calculated based on acceleration detected by an acceleration sensor.

When it is determined that the measured speed is equal to or greater than a reference speed in step S4104, the wearable device 100a determines that the user is in the vehicle in step S4106. For example, when the speed measured by the wearable device 100a is equal to or greater than 20 miles/hour, the wearable device 100a determines that the user is in the vehicle.

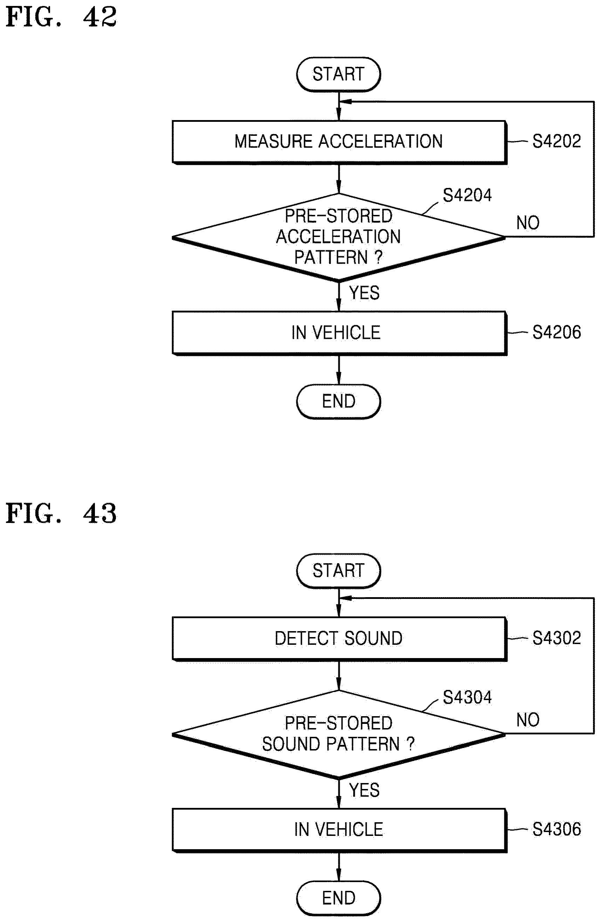

FIG. 42 illustrates a method of determining whether a user is in a vehicle, the method being performed by the wearable device 100a, according to another embodiment of the present invention.

In FIG. 42, the wearable device 100a determines whether the user is in the vehicle, based on acceleration of the vehicle. The wearable device 100a measures the acceleration in step S4202, based on acceleration detected by an acceleration sensor formed in the wearable device 100a.

When a pattern of the measured acceleration corresponds to a pre-stored acceleration pattern in step S4204, the wearable device 100a determines that the user is in the vehicle in step S4206. The pre-stored acceleration pattern includes an acceleration change pattern corresponding to at least one of an increase or decrease in a speed of the vehicle, a lane change, a left turn, a right turn, and a U-turn of the vehicle, or a combination thereof. When the pre-stored acceleration pattern is repeatedly detected, such as more than a reference number of times within a reference time period, the wearable device 100a determines that the user is in the vehicle.

FIG. 43 illustrates a method of determining whether a user of the wearable device 100a is in a vehicle, according to another embodiment of the present invention.

In FIG. 43, the wearable device 100a determines whether the user is in the vehicle, based on detected sound. The wearable device 100a detects sound in step S4302, such as by using a microphone formed at the wearable device 100a.

The wearable device 100a determines whether the detected sound is similar to a pre-stored sound pattern in step S4304. The pre-stored sound pattern includes a sound of a vehicle engine, a motorcycle engine, a bus engine, a subway car, and an airplane, for example. The comparison between the detected sound and the pre-stored sound pattern may be performed by using a correlation technique.

When the detected sound is similar to the pre-stored sound pattern, the wearable device 100a determines that the user is in the vehicle in step S4306.

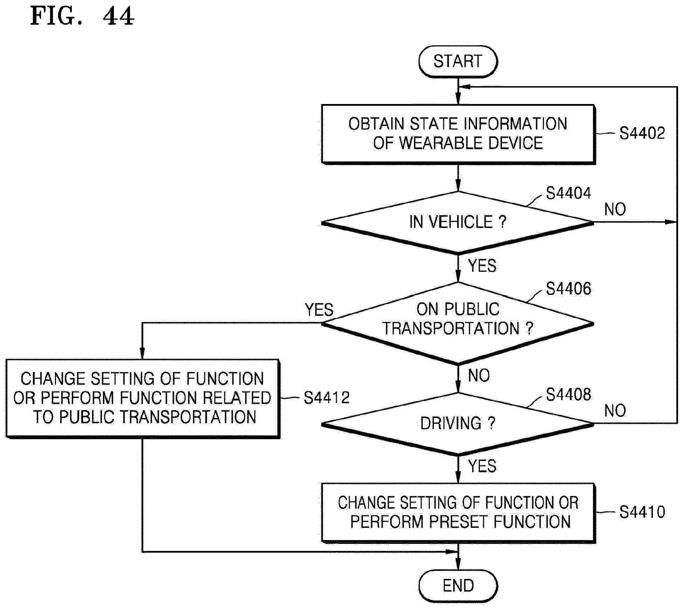

FIG. 44 illustrates a method of controlling the wearable device 100a, according to another embodiment of the present invention.

In FIG. 44, the wearable device 100a determines whether a user is on public transportation.

The wearable device 100a obtains state information of the wearable device 100a in step S4402.

The wearable device 100a determines, based on the state information, whether the user is in a vehicle in step S4404, by setting communication with the vehicle or by detecting speed or acceleration, sound, for example.

If the user is in the vehicle, the wearable device 100a determines whether the user is on public transportation in step S4406, by using a magnetic field, sound, or vibration value, for example.

When the user is not on public transportation, the wearable device 100a determines whether the user is driving in step S4408, such as by using vibration, motion, or a captured image, for example. When the user is on public transportation, the wearable device 100a determines that the user is not driving. According to the present embodiment, the possibility that the wearable device 100a may incorrectly determine that the user is driving while the user is on public transportation is decreased.

If the user is driving, the wearable device 100a changes the setting of a function of the wearable device 100a or performs a preset function in step S4410.

According to the present embodiment, when the wearable device 100a determines that the user is on public transportation in step S4406, the wearable device 100a changes the setting of a function or performs a function that is preset for when the user is on public transportation in step S4412. For example, when the user is on public transportation, the wearable device 100a places a notification mode on vibrate, or executes a subway route guide application or a bus route guide application.

According to another embodiment, the wearable device 100a determines a type of the public transportation, based on state information of the wearable device 100a, and changes the setting of a function or performs a function, according to the type of the public transportation. For example, the wearable device 100a determines, based on a vibration pattern, the type of public transportation that the user is on from among a subway car, a bus, a train, and an airplane, and changes the setting of a function or performs a function, according to a type of the public transportation. For example, if the wearable device 100a determines that the user is on the subway car, the wearable device 100a executes a subway route guide application, and if the wearable device 100a determines that the user is on the bus, the wearable device 100a executes a bus route guide application. If the wearable device 100a determines that the user is on the airplane, the wearable device 100a changes the mode of the wearable device 100a to an airplane mode, or deactivates the communication module.

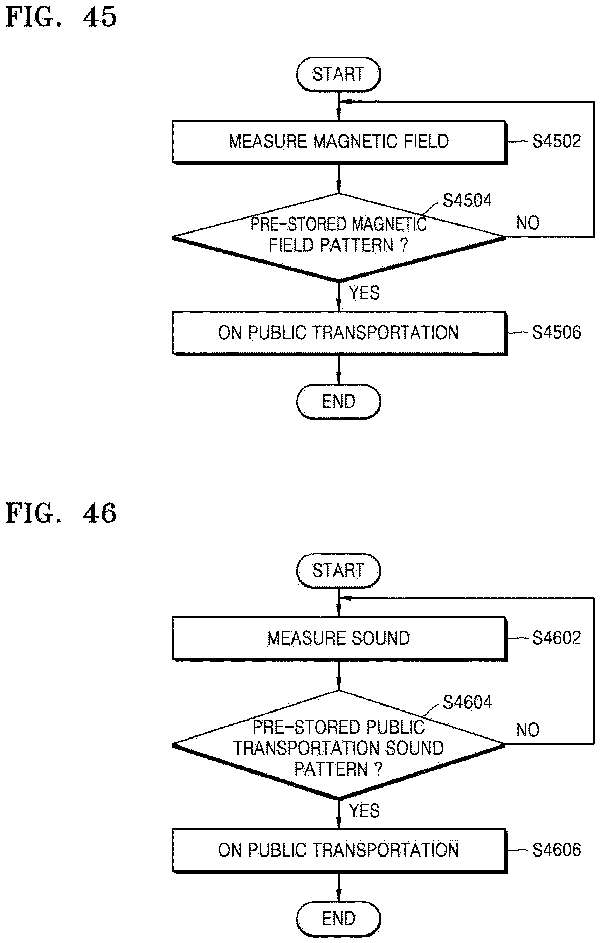

FIG. 45 illustrates a method of determining whether a user is on public transportation, according to an embodiment of the present invention.
in FIG. 45, the wearable device 100a determines whether the user is on public transportation, by measuring a magnetic field. The wearable device 100a includes a magnetic field sensor, and measures the magnetic field by using the magnetic field sensor in step S4502.

The wearable device 100a compares the measured magnetic field with a pre-stored magnetic field pattern in step S4504, and if the pre-stored magnetic field pattern is detected, the wearable device 100a determines that the user is on public transportation in step S4506. For example, the wearable device 100a pre-stores a magnetic field pattern of a subway car or an electronic railway car, and if the pre-stored magnetic field pattern of the subway car or the electronic railway car is detected, the wearable device 100a determines that the user is on the subway car or the electronic railway car.

FIG. 46 illustrates a method of determining whether a user is on public transportation, according to another embodiment of the present invention.

In FIG. 46, the wearable device 100a determines whether the user is on public transportation, by measuring sound by using a microphone included in the wearable device 100a in step S4602.

The wearable device 100a compares the measured sound with a pre-stored sound pattern in step S4604, and if the pre-stored sound pattern is detected, the wearable device 100a determines that the user is on public transportation in step S4606. For example, the wearable device 100a pre-stores a sound pattern of each of a subway car, an electronic railway car, a bus, a train, an airplane, and a ship, and determines that the user on public transportation if the pre-stored sound pattern is detected. The pre-stored sound pattern includes vibration sound of an engine and a public transportation announcement, for example. The wearable device 100a determines a type of the public transportation, according to the detected sound pattern.

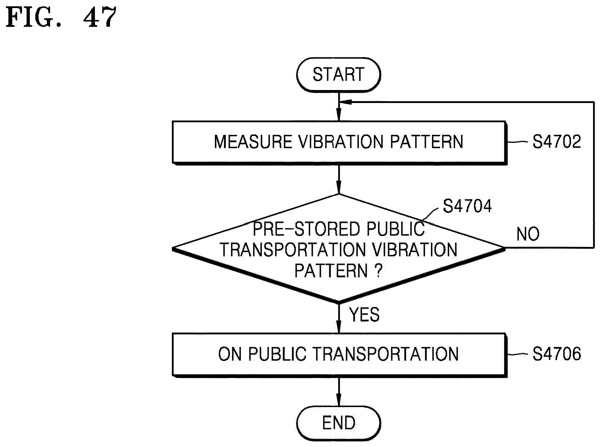

FIG. 47 illustrates a method of determining whether a user is on public transportation, according to another embodiment of the present invention.

In FIG. 47, the wearable device 100a determines whether the user is on public transportation, by measuring vibration an acceleration sensor included in the wearable device 100a in step S4702.

The wearable device 100a compares the measured vibration with a pre-stored vibration pattern in step S4704, and if the pre-stored vibration pattern is detected, the wearable device 100a determines that the user is on public transportation in step S4706. For example, the wearable device 100a pre-stores a vibration pattern of each of a subway car, an electronic railway car, a bus, a train, an airplane, and a ship, and determines that the user is on public transportation if the pre-stored vibration pattern is detected. The wearable device 100a determines a type of the public transportation, according to the detected vibration pattern.

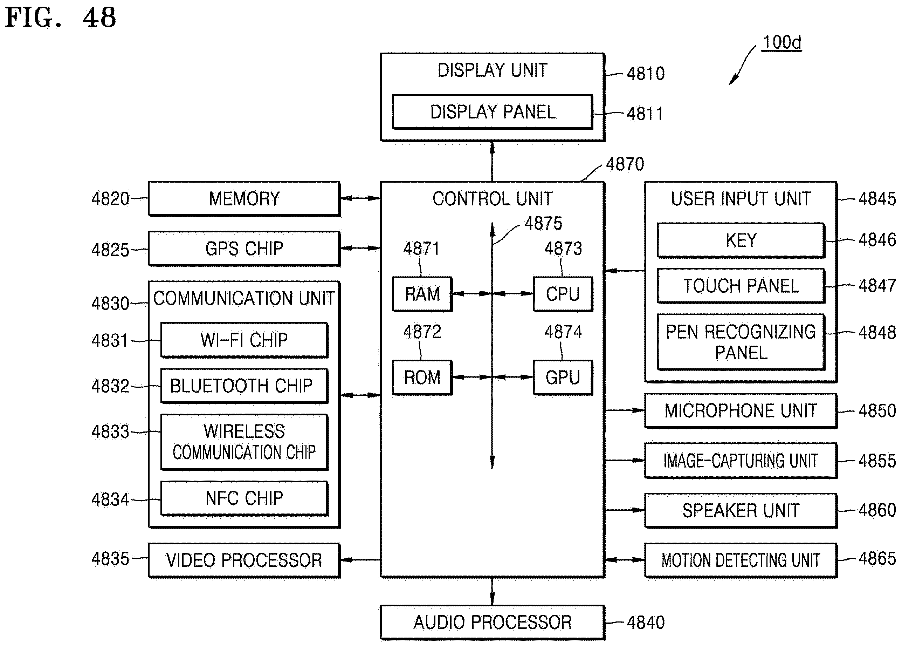

FIG. 48 is a block diagram illustrating a configuration of a wearable device 100d, according to an embodiment of the present invention.

As illustrated in FIG. 48, the configuration of the wearable device 100d may be applied to various types of devices including a mobile phone, a tablet PC, a personal digital assistant (PDA), an MP3 player, a kiosk, an electronic photo-frame, a navigation device, a digital television (TV), or wearable devices including a wristwatch and a head-mounted display (HMD), for example.

Referring to FIG. 48, the wearable device 100d includes a display unit 4810, a control unit 4870, a memory 4820, a GPS chip 4825, a communication unit 4830, a video processor 4835, an audio processor 4840, a user input unit 4845, a microphone unit 4850, an image-capturing unit 4855, a speaker unit 4860, and a motion-detecting unit 4865.

The display unit 4810 includes a display panel 4811 and a controller that controls the display panel 4811. The display panel 4811 may be embodied as various displays including liquid crystal display (LCD), an organic light-emitting diode (OLED) display, an active matrix OLED (AMOLED) display, and a plasma display panel (PDP), for example. The display panel 4811 may be formed to be flexible, transparent, and/or wearable, and may be combined with a touch panel 4847 of the user input unit 4845, thereby provided as a touchscreen. For example, the touchscreen includes an integrated module having a stack structure containing the display panel 4811 and the touch panel 4847.

The memory 4820 includes at least one of an internal memory and an external memory.

The internal memory includes at least one of a volatile memory such as a dynamic random-access memory (DRAM), a static RAM (SRAM), or a synchronous dynamic RAM (SDRAM), a non-volatile memory such as a one-time programmable read-only memory (OTPROM), a programmable ROM (PROM), an erasable and programmable ROM (EPROM), an electrically erasable and programmable ROM (EEPROM), a mask ROM, and a flash ROM, a hard disk drive (HDD), and a solid-state drive (SSD). According to the present embodiment, the control unit 4870 loads a command or data, which is received from at least one of the non-volatile memory and another element, to the volatile memory, and processes the command or the data. The control unit 4870 stores, in the non-volatile memory, data that is received from or is generated by another element.

The external memory includes at least one of a compact flash (CF) memory, a secure digital (SD) memory, a micro secure digital (micro-SD) memory, a mini secure digital (mini-SD) memory, an extreme digital (xD) memory, and a memory stick.

The memory 4820 stores various programs and data used in the wearable device 100d. For example, the memory 4820 may temporarily or semi-permanently store a portion of contents to be displayed on a lock screen.

The control unit 4870 controls the display unit 4810 to display the portion of the contents which is stored in the memory 4820. Alternatively, when a user's gesture is performed in a region of the display unit 4810, the control unit 4870 performs a control operation that corresponds to the user's gesture.

The control unit 4870 includes a RAM 4871, a ROM 4872, a central processing unit (CPU) 4873, a graphics processor unit (GPU) 4874, and a bus 4875 that connects the RAM 4871, the ROM 4872, the CPU 4873, and the GPU 4874 to each other.

The CPU 4873 accesses the memory 4820, and performs a booting operation by using an OS stored in the memory 4820. The CPU 4873 performs various operations by using the various programs, contents, and pieces of data stored in the memory 4820.

The ROM 4872 stores a command set for booting up a system. For example, when a turn-on command is input to the wearable device 100d, and power is supplied to the wearable device 100d, the CPU 4873 copies the OS stored in the memory 4820 to the RAM 4871, according to the command stored in the ROM 4872, executes the OS, and thus boots up the system. When the booting operation is completed, the CPU 4873 copies the various programs stored in the memory 4820 to the RAM 4871, and performs the various operations by executing the programs copied to the RAM 4871. When the wearable device 100d is booted up, the GPU 4874 displays a user interface screen in a region of the display unit 4810. In more detail, the GPU 4874 generates a screen that displays an electronic document including various objects such as content, an icon, and a menu, for example. The GPU 4874 calculates coordinate values of the objects that are to be displayed according to a layout of the user interface screen, and calculates attribute values of shapes, sizes, or colors of the objects. Then, the GPU 4874 generates user interface screens with various layouts including the objects based on the calculated attribute values. The user interface screen generated by the GPU 4874 may be provided to the display unit 4810 and thus may be displayed in regions of the display unit 4810.

The GPS chip 4825 receives a GPS signal from a GPS satellite and calculates a current position of the wearable device 100d. When a navigation program is used or a current position of the user is required, the control unit 4870 calculates a position of the user by using the GPS chip 4825.

The communication unit 4830 performs communication with various external devices according to various types of communication methods. The communication unit 4830 includes at least one selected from a Wi-Fi chip 4831, a Bluetooth^{®} chip 4832, a wireless communication chip 4833, and a NFC chip 4834. The control unit 4870 performs the communication with the various external devices by using the communication unit 4830.

The Wi-Fi chip 4831 and the Bluetooth^{®} chip 4832 perform communication by using WiFi and Bluetooth^{®}, respectively. If the Wi-Fi chip 4831 or the Bluetooth^{®} chip 4832 is used, the WiFi chip 4831 or the Bluetooth^{®} chip 4832 transmit and receive various types of connection information including a service set identification (SSIDor a session key, for example, establish a connection for communication by using the connection information, and then transmit and receive various types of information. The wireless communication chip 4833 performs communication according to various communication standards such as the Institute of Electrical and Electronics Engineers (IEEE), ZigBee, 3^{rd} generation (3G), 3rd Generation Partnership Project (3GPP), and Long Term Evolution (LTE), for example. The NFC chip 4834 operates using NFC by using a 13.56 MHz band from among various radio frequency-identification (RF-ID) frequency bands such as 135 kHz, 13.56 MHz, 433 MHz, 860-960 MHz, and 2.45 GHz, for example.

The video processor 4835 processes video data included in content received by using the communication unit 4830 or processes video data included in content stored in the memory 4820. The video processor 4835 performs various image processing such as decoding, scaling, noise filtering, frame rate conversion, and resolution conversion, on the video data.

The audio processor 4840 processes audio data included in content received by using the communication unit 4830 or processes audio data included in content stored in the memory 4820. The audio processor 4840 performs various processing such as decoding, amplification, and noise filtering on the audio data.

When a reproducing program for multimedia content is executed, the control unit 4870 reproduces the multimedia content by driving the video processor 4835 and the audio processor 4840. The speaker unit 4860 outputs audio data generated in the audio processor 4840.

The user input unit 4845 receives an input of various instructions from a user, and includes at least one selected from a key 4846, a touch panel 4847, and a pen-recognizing panel 4848.

The key 4846 may be of various types such as a mechanical button or a wheel that may be formed in a front portion, a side portion, or a rear portion of an external surface of a body of the wearable device 100d.

The touch panel 4847 senses a touch input by the user and outputs a value of a touch event that corresponds to a signal generated by the sensed touch input. When the touch panel 4847 is combined with the display panel 4811 and thus is formed as a touchscreen, the touchscreen may be configured as a capacitive touchscreen, a resistive touchscreen, or a piezoelectric touchscreen by using various types of touch sensors. The capacitive touchscreen calculates touch coordinates by sensing a small amount of electricity generated when a body part of the user touches the surface of the capacitive touchscreen, which is coated with a dielectric material. The resistive touchscreen includes two embedded electrode plates and calculates touch coordinates by sensing a flow of current that occurs when the user touches the resistive touchscreen that causes upper and lower plates of a touched point to contact each other. The touch event that occurs on the touchscreen is primarily generated by a finger of a person but may also be generated by an object formed of a conductive material capable of changing capacitance.

The pen-recognizing panel 4848 senses a proximity input or a touch input of a touch pen such as a stylus pen or a digitizer pen, which is performed by a user, and outputs a sensed pen proximity event or a sensed pen touch event. The pen-recognizing panel 4848 may be an electromagnetic resonance (EMR)-type pen-recognizing panel, and senses the touch input or the proximity input according to changes in strength of an electromagnetic field, which occurs when the touch pen approaches or touches the touchscreen. In more detail, the pen-recognizing panel 4848 includes an electromagnetic induction coil sensor having a grid structure, and an electric signal processor for sequentially providing an alternating current (AC) signal having a predetermined frequency to each loop coil of the electromagnetic induction coil sensor.

When a pen having an internal resonance circuit is positioned near a loop coil of the pen-recognizing panel 4848, a magnetic field transmitted from the loop coil generates a current in the resonance circuit in the pen, based on mutual electrostatic induction. Due to the current, an induction field is generated from a coil forming the resonance circuit in the pen. The pen-recognizing panel 4848 detects the induction field from the loop coil capable of receiving a signal, and thus senses the touch input or the proximity input by the pen. The pen-recognizing panel 4848 may be arranged to occupy a preset area below the display panel 4811, such as by having a size capable of covering a display region of the display panel 4811.

The microphone unit 4850 receives an input of a user's voice or another sound and converts the user's voice or other sound to audio data. The control unit 4870 uses the user's voice, which is input via the microphone unit 4850, in a call-related operation or converts the user's voice to the audio data which it stores in the memory 4820.

The image-capturing unit 4855 captures a still image or a moving picture according to a control by the user. The image-capturing unit 4855 may be plural in number and includes a front camera and a rear camera, for example.

If the image-capturing unit 4855 and the microphone unit 4850 are formed, the control unit 4870 may perform a control operation according to a user's voice input via the microphone unit 4850 or a user's motion recognized by the image-capturing unit 4855. For example, the wearable device 100d operates in a motion control mode or a voice control mode. If the wearable device 100d operates in the motion control mode, the control unit 4870 activates the image-capturing unit 4855 and captures an image of the user, traces a change in motions of the user, and performs a control operation corresponding thereto. If the wearable device 100d operates in the voice control mode (i.e., a voice recognition mode), the control unit 4870 analyzes a user's voice input via the microphone unit 4850, and performs a control operation according to the analyzed user's voice.

The motion-detecting unit 4865 detects movement of a body of the wearable device 100d that rotates or tilts in various directions. The motion-detecting unit 4865 detects a movement characteristic such as a rotation direction, a rotation angle, and a tilted angle by using at least one of a magnetic sensor, a gyroscope sensor, or an acceleration sensor.

The embodiment of FIG. 48 may further include a universal serial bus (USB) port for connecting the wearable device 100d and a USB connector, various external input ports including a headset, a mouse, and a local area network (LAN) for connection with various external terminals, a digital multimedia broadcasting (DMB) chip for receiving and processing a DMB signal, and various sensors, for example.

Names of elements in the wearable device 100d may vary. The wearable device 100d according to the present embodiment includes at least one of the aforementioned elements, or may be embodied with more or fewer elements than the aforementioned elements.

The touch panel 4847, the microphone unit 4850, the image-capturing unit 4855, and the motion-detecting unit 4865 of FIG. 48 may correspond to the sensor unit 210 of the wearable device 100a, 100b, or 100c. The control unit 4870 of FIG. 48 may correspond to the control unit 220 of the wearable device 100a, 100b, or 100c. The display unit 4810 of FIG. 48 may correspond to the display unit 610 of the wearable device 100b or 100c. The communication unit 4830 of FIG. 48 may correspond to the communication unit 1810 of the wearable device 100c.

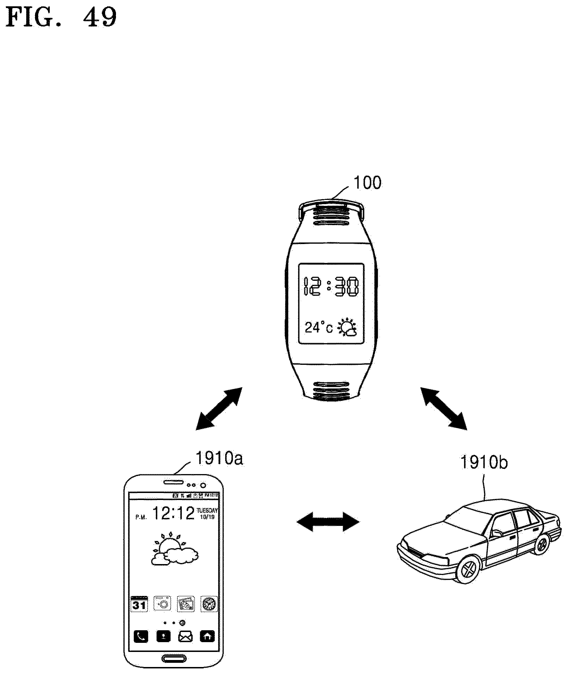

FIG. 49 illustrates an example in which the wearable device 100 performs a particular function according to a state of a user in a vehicle, by using at least one of the external device 1910a and the vehicle 1910b, according to an embodiment of the present invention.

Referring to FIG. 49, the wearable device 100 communicates with at least one of the external device 1910a and the vehicle 1910b via a network. The network includes a Local Area Network (LAN), a Wide Area Network (WAN), a Value Added Network (VAN), a mobile radio communication network, a satellite communication network, or a combination thereof, and indicates a general-concept data communication network capable of allowing network parties shown in FIG. 49 to communicate with one another and includes wired Internet, wireless Internet, and a mobile wireless communication network.

Due to size constraints, the wearable device 100 has a lesser calculation ability than that of the external device 1910a and the vehicle 1910b. Accordingly, the wearable device 100 uses a calculation ability of the external device 1910a or the vehicle 1910b, and thus performs the particular function according to the state of the user in the vehicle. For example, the wearable device 100 performs a preset function of the wearable device 100, according to whether the user is in the vehicle or is driving.

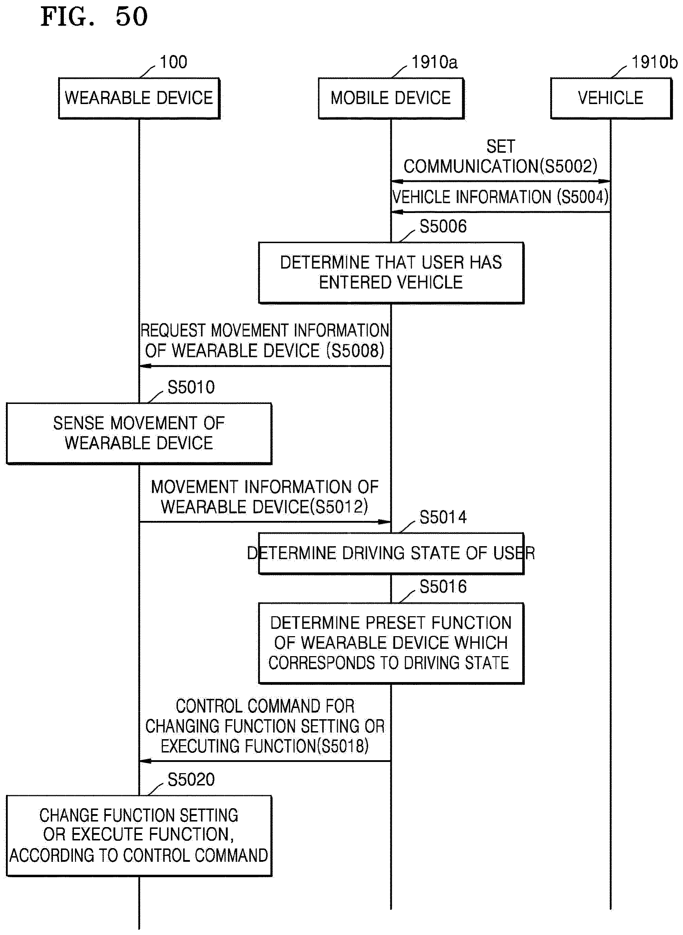

FIG. 50 illustrates a method of establishing a network with the mobile device 1910a and the vehicle 1910b and performing a particular function when a user is driving, the method being performed by the wearable device 100, according to an embodiment of the present invention.

Referring to FIG. 50, the mobile device 1910a that is connected with the wearable device 100 determines whether the user has entered a vehicle, by using vehicle information received from the vehicle 1910b, and determines a state of the user by using movement information of the wearable device 100.

In step S5002, the mobile device 1910a sets communication with the vehicle 1910b, such as via short-distance communication.

In step S5004, the vehicle 1910b provides the vehicle information to the mobile device 1910a. For example, the vehicle information includes a model of the vehicle 1910b, a unique number of the vehicle 1910b, state information of the vehicle 1910b, and driving information of the vehicle 1910b. The unique number of the vehicle 1910b includes numbers of a license plate and a serial number of the vehicle 1910b. When the communication is set between the mobile device 1910a and the vehicle 1910b, the vehicle information is automatically transmitted from the vehicle 1910b to the mobile device 1910a. According to another embodiment, the vehicle 1910b transmits the vehicle information to the mobile device 1910a, in response to a request from the mobile device 1910a.

In step S5006, the mobile device 1910a determines that the user has entered the vehicle 1910b by receiving the vehicle information from the vehicle 1910b, comparing the received vehicle information with vehicle information pre-registered in the mobile device 1910a, and thus determining that the user has entered the vehicle 1910b based on the comparison.

In step S5008, the mobile device 1910a requests movement information from the wearable device 100 , such as at preset intervals. Alternatively, when the mobile device 1910a determines that a preset event has occurred, the mobile device 1910a requests, from the wearable device 100, the movement information of the wearable device 100. For example, when the mobile device 1910a determines that the mobile device 1910a moves according to a preset pattern, the mobile device 1910a requests, from the wearable device 100, the movement information of the wearable device 100. For example, when the mobile device 1910a receives preset vehicle information from the vehicle 1910b, and determines that the vehicle 1910b moves according to a preset pattern, the mobile device 1910a requests the wearable device 100 for the movement information of the wearable device 100. In step S5010, the wearable device 100 senses movement of the wearable device 100. The wearable device 100 obtains, by using at least one sensor included in the wearable device 100, the state information such as an acceleration value, a vibration value, a tilt value, location information, magnetic field information, proximity/touch information, an image-capturing signal, sound, or an infrared-ray detection value, for example, and generates the movement information of the wearable device 100.

In step S5012, the wearable device 100 provides the movement information of the wearable device 100 to the mobile device 1910a at preset intervals. Alternatively, when a preset event occurs, the wearable device 100 transmits the movement information of the wearable device 100 to the mobile device 1910a. For example, when a variation value of the movement of the wearable device 100 is equal to or greater than a preset value, the wearable device 100 transmits the movement information of the wearable device 100 to the mobile device 1910a. For example, when the wearable device 100 moves according to a preset pattern, the wearable device 100 transmits the movement information of the wearable device 100 to the mobile device 1910a. For example, when the wearable device 100 determines that a rotation thereof occurren in a clockwise direction or in a counterclockwise direction by an angle equal to or greater than a preset value, the wearable device 100 transmits the movement information of the wearable device 100 to the mobile device 1910a.

In step S5014, the mobile device 1910a determines whether the user is driving by analyzing the movement information of the wearable device 100. The mobile device 1910a determines whether the user is driving, by further using the movement of the mobile device 1910a, a communication state with the vehicle 1910b, and/or the vehicle information received from the vehicle 1910b. For example, the mobile device 1910a determines whether the user is driving, the user stops the vehicle during driving, or a speed of the vehicle 1910b driven by the user is equal to or greater than a preset value.

In step S5016, the mobile device 1910a determines a preset function of the wearable device 100 which corresponds to a driving state. A function of the wearable device 100 may be variously set according to the driving state of the user. For example, the function of the wearable device 100 according to the driving state of the user includes controlling a radio and an optical disc player of the vehicle 1910b, controlling navigation of the vehicle 1910b, changing communication setting of the wearable device 100, and activating/inactivating a screen of the wearable device 100.

In step S5018, the mobile device 1910a provides, to the wearable device 100, a control command for changing function setting or executing a function. The mobile device 1910a recognizes an OS installed in the wearable device 100, and transmits, to the wearable device 100, a control command with a format that is usable by the wearable device 100.

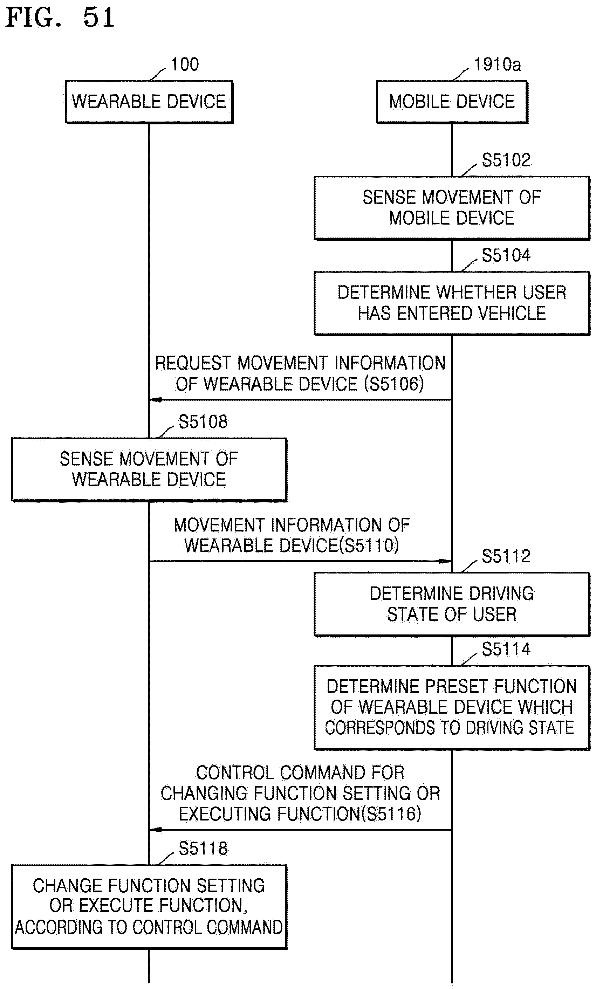

In step S5020, the wearable device 100 changes the function setting or executes the function of the wearable device 100, by using the control command received from the mobile device 1910a. For example, the wearable device 100 displays, on a screen of the wearable device 100, a user interface for changing a volume of the radio and the optical disc player of the vehicle 1910b, and a user interface for controlling the navigation of the vehicle 1910b. For example, the wearable device 100 changes the communication setting of the wearable device 100. For example, the wearable device 100 activates or deactivates the screen of the wearable device 100. FIG. 51 illustrates a method of establishing a network with the mobile device 1910a and performing a particular function when a user is driving, the method being performed by the wearable device 100, according to an embodiment of the present invention. Referring to FIG. 51, the wearable device 100 and the mobile device 1910a may not communicate with the vehicle 1910b. The mobile device 1910a changes the function setting of the wearable device 100 or executes a function of the wearable device 100 while the mobile device 1910a communicates with the wearable device 100.

Steps S5106 through S5118 of FIG. 51 correspond to S5008 through S5020 of FIG. 50, and thus are not described here for convenience of description.

In step S5102, the mobile device 1910a senses movement of the mobile device 1910a by using at least one sensor in the mobile device 1910a.

In step S5104, the mobile device 1910a determines whether the user has entered the vehicle 1910b, when a movement pattern of the mobile device 1910a corresponds to a preset pattern. For example, when a moving speed of the mobile device 1910a is equal to or greater than a preset value, the mobile device 1910a determines that the user has entered the vehicle 1910b.

When the mobile device 1910a determines that the user has entered the vehicle 1910b, the mobile device 1910a searches for the wearable device 100 around the mobile device 1910a. In step S5106, the mobile device 1910a requests, from the wearable device 100, movement information of the wearable device 100.

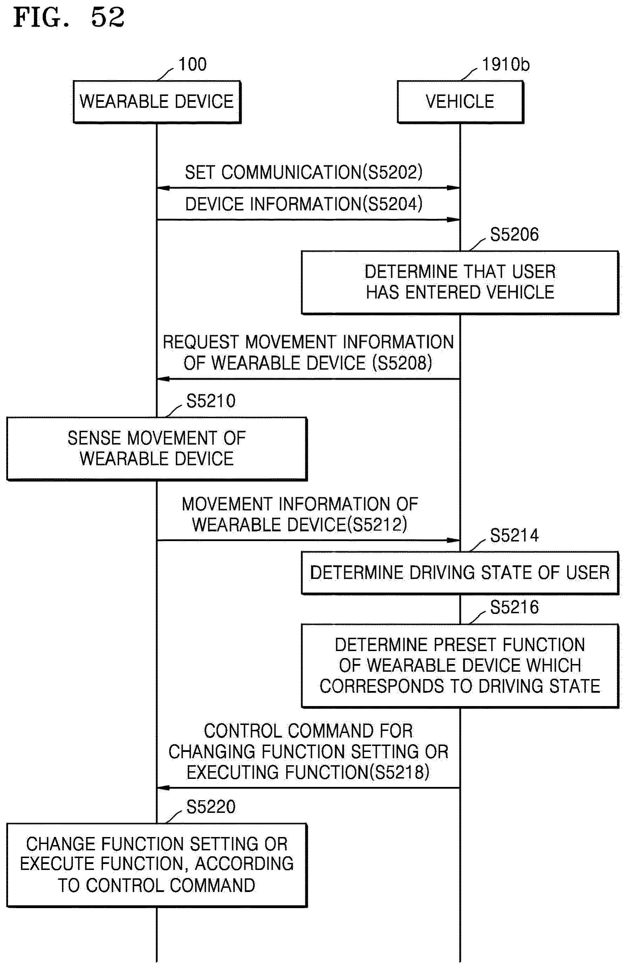

FIG. 52 illustrates a method of establishing a network with the vehicle 1910b and performing a particular function when a user is driving, the method being performed by the wearable device 100, according to an embodiment of the present invention.

Steps S5208 through S5220 of FIG. 52 correspond to Steps S5008 through S5020 of FIG. 50, and thus are not described here for convenience of description.

In step 5202, vehicle 1910b sets communication with the wearable device 100. When the user is in the vehicle 1910b, the wearable device 100 searches for the vehicle 1910b, and sets the communication with the found wearable device 100.

In step 5204, the wearable device 100 transmits device information to the vehicle 1910b. Since the wearable device 100 sets the communication with the vehicle 1910b, the wearable device 100 transmits an identification value and OS information of the wearable device 100 to the vehicle 1910b.

The vehicle 1910b determines that the user has entered the vehicle 1910b, and controls a function of the wearable device 100.

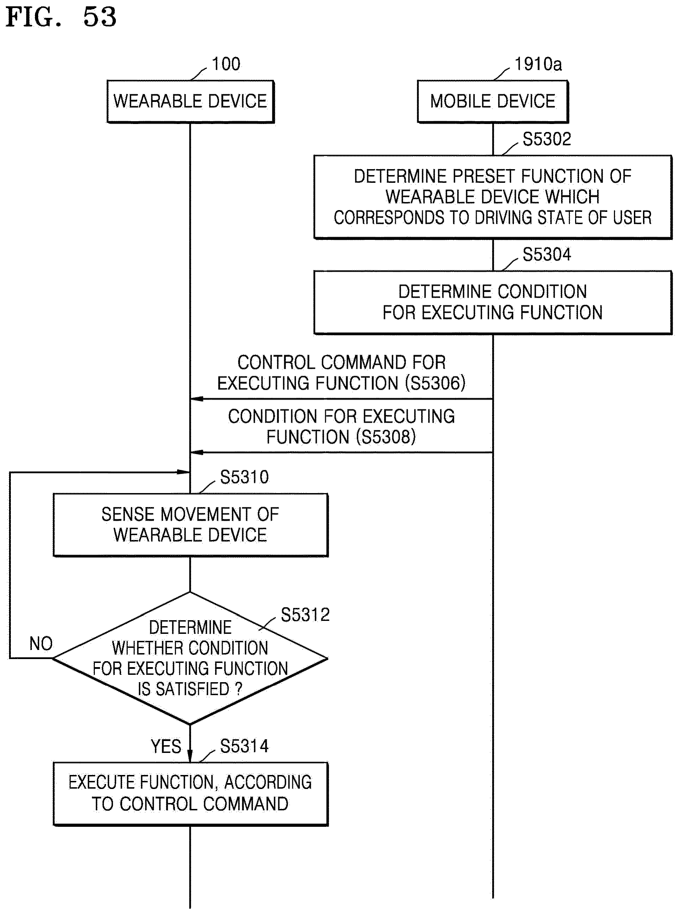

FIG. 53 illustrates a method of executing a function of the wearable device 100 according to a control command received from the mobile device 1910a, when the wearable device 100 satisfies a preset condition, according to an embodiment of the present invention.

In step S5302, the mobile device 1910a determines a preset function of the wearable device 100 which corresponds to a driving state of the user. The function of the wearable device 100 according to the driving state of the user includes controlling a radio and an optical disc player of the vehicle 1910b, controlling navigation of the vehicle 1910b, changing communication setting of the wearable device 100, and activating/inactivating a screen of the wearable device 100.

In step S5304, the mobile device 1910a determines a condition for executing the function of the wearable device 100, based on a driving state of the vehicle 1910b, a distance between a current location of the vehicle 1910b and a destination, a current time, or a type of a currently-activated function in the wearable device 100, for example. The mobile device 1910a sets conditions for executing functions of the wearable device 100, respectively.

For example, the mobile device 1910a sets a condition so that the wearable device 100 performs a particular function when the mobile device 1910a determines that the vehicle 1910b has stopped for more than a preset time period. For example, the mobile device 1910a sets a condition so that the wearable device 100 activates a screen of the wearable device 100 when the mobile device 1910a determines that the vehicle 1910b has stopped for more than 5 seconds.

For example, the mobile device 1910a sets a condition by which the wearable device 100 performs or does not perform a particular function when the mobile device 1910a determines that the vehicle 1910b is running for more than a preset time period. For example, the mobile device 1910a sets a condition by which the wearable device 100 does not execute a function that is irrelevant to controlling the vehicle 1910b when the mobile device 1910a determines that the vehicle 1910b is running for more than 1 second

In step S5306, the mobile device 1910a transmits, to the wearable device 100, a control command for executing the function of the wearable device 100, and in step S5308, the mobile device 1910a transmits, to the wearable device 100, information about the condition for executing the function of the wearable device 100.

In step S5310, the wearable device 100 senses movement of the wearable device 100by using various sensors included in the wearable device 100. However, one or more embodiments are not limited thereto, and the wearable device 100 obtains various types of information required for the wearable device 100 to determine whether the condition for executing the function that corresponds to the control command from the mobile device 1910a is satisfied.

In step S5312, the wearable device 100 determines whether the condition for executing the function is satisfied by recognizing the function that corresponds to the control command received from the mobile device 1910a. For example, if the function that corresponds to the control command received from the mobile device 1910a is to activate a screen of the wearable device 100, the wearable device 100 determines, based on movement information of the wearable device 100, whether the vehicle 1910b has stopped for more than 5 seconds.

As a result of the determination in step S5312, when the wearable device 100 determines that the condition for executing the function of the wearable device 100 is satisfied, in step S5314, the wearable device 100 executes the function of the wearable device 100, according to the control command.

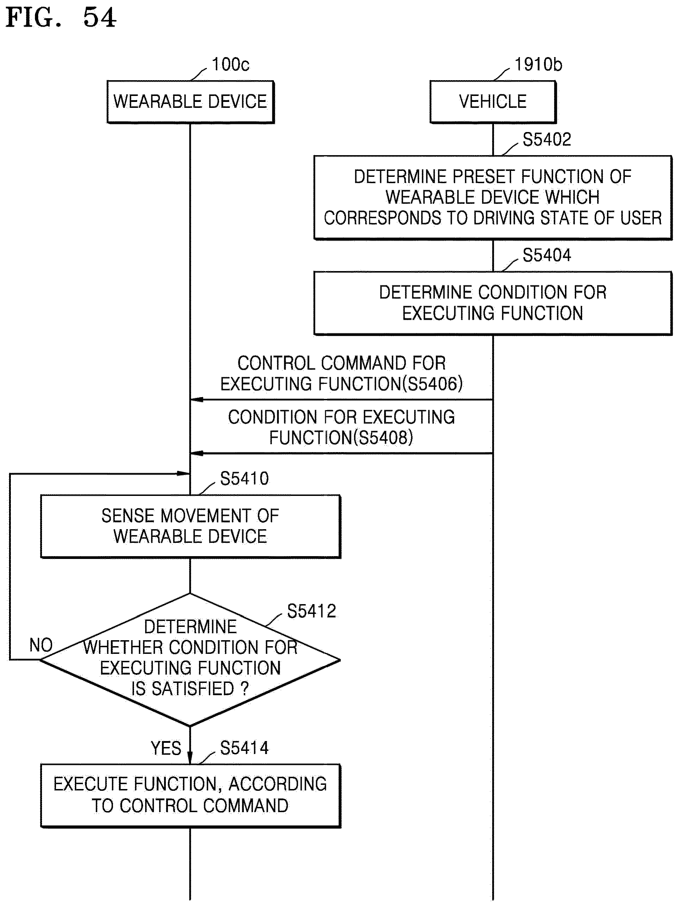

FIG. 54 illustrates a method of executing a function of the wearable device 100c according to a control command received from the vehicle 1910b, when the wearable device 100c satisfies a preset condition, according to an embodiment of the present invention.

Referring to FIG. 54, similar to the mobile device 1910a of FIG. 53, the vehicle 1910b determines a condition for executing a function of the wearable device 100c, and transmits, to the wearable device 100c, a control command and condition information for executing the function of the wearable device 100c.

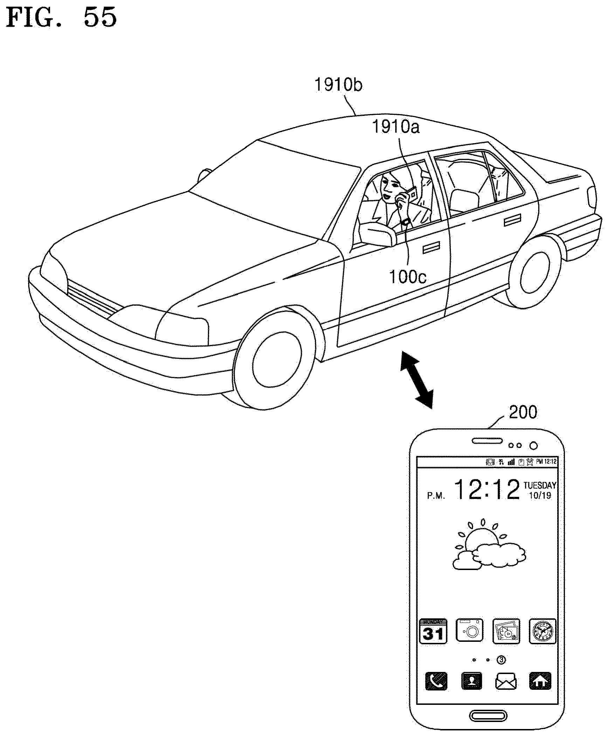

FIG. 55 illustrates an example in which the wearable device 100 and the mobile device 1910a of a user who is driving the vehicle 1910b perform a phone call with another device 200 of another user, according to an embodiment of the present invention.

Referring to FIG. 55, the other device 200 of the other user places a phone call to the mobile device 1910a of the user, and when the user is driving, the mobile device 1910a interoperates with the wearable device 100c so as to allow the user to make the phone call with the other user via the wearable device 100c. The mobile device 1910a relays a call voice for the phone call between the wearable device 100c and the other device 200. The mobile device 1910a provides caller information of the other device 200 to the wearable device 100c so as to connect a call between the wearable device 100c and the other device 200.

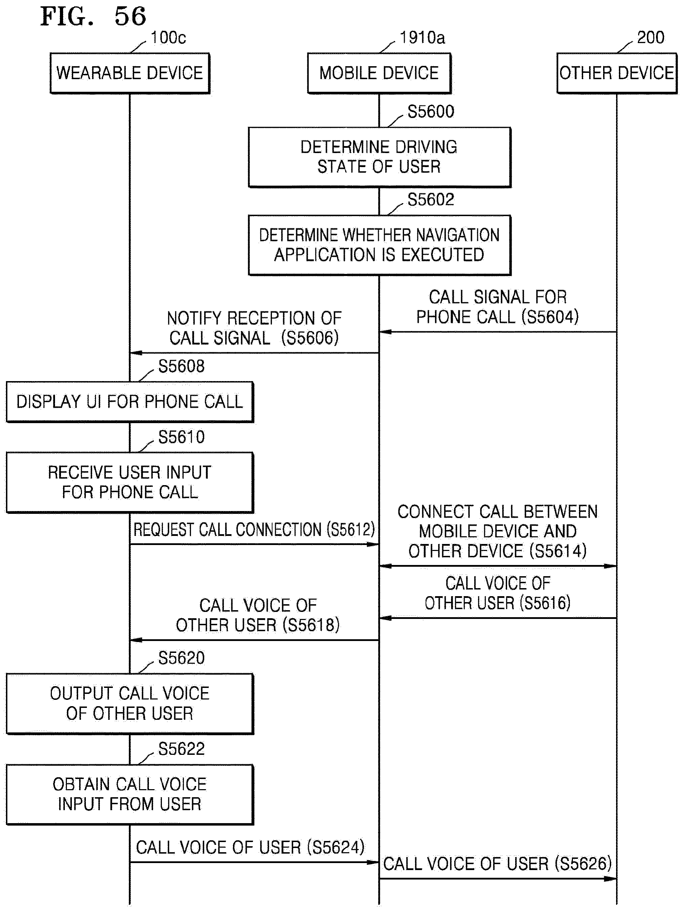

FIG. 56 illustrates a method of placing a phone call via the mobile device 1910a to the other device 200, the method being performed by the wearable device 100c of a user who is driving, according to an embodiment of the present invention. In FIG. 56, the mobile device 1910a, which has an activated call function, relays a phone call between the wearable device 100c and the other device 200.

In step S5600, the mobile device 1910a determines whether the user is driving by analyzing movement of the wearable device 100c. The mobile device 1910a determines whether the user is driving, by using movement of the mobile device 1910a, a communication state with the vehicle 1910b, and/or vehicle information received from the vehicle 1910b. For example, the mobile device 1910a determines whether the user is driving, whether the user stops the vehicle 1910b during driving, and whether a speed of the vehicle 1910b driven by the user is equal to or greater than a preset value.

In step S5602, the mobile device 1910a determines whether a navigation application in the mobile device 1910a is executed by determining whether a navigation device in the vehicle 1910b is operating.

In step S5604, the mobile device 1910a receives a call signal for a phone call from the other device 200. The other device 200 transmits the call signal for the phone call to the mobile device 1910a, which receives the transmitted call signal.

In step S5606, the mobile device 1910a notifis the wearable device 100c of reception of the call signal from the other device 200. When the mobile device 1910a determines that the user is driving, the mobile device 1910a notifies the wearable device 100c of reception of the call signal from the other device 200. When the mobile device 1910a determines that the navigation application in the mobile device 1910a is executed, the mobile device 1910a notifies the wearable device 100c of reception of the call signal from the other device 200. In this case, the mobile device 1910a provides caller information such as a telephone number or a user name, of the other device 200 to the wearable device 100c.

In step S5608, the wearable device 100c displays a user interface for a phone call. The wearable device 100c outputs, via a display of the wearable device 100c, the caller information received from the mobile device 1910a. The user interface for a phone call includes a button for determining whether to perform the phone call with the other device 200. The wearable device 100c outputs a ringtone via a speaker of the wearable device 100c, or generates vibration by using a vibration plate in the wearable device 100c.

In step S5610, the wearable device 100c receives a user input for the phone call via the displayed user interface. The wearable device 100c receives a voice command of the user for the phone call.

In step S5612, the wearable device 100c requests the mobile device 1910a for call connection between the mobile device 1910a and the other device 200. The wearable device 100c requests the mobile device 1910a to establish a network for the phone call between the mobile device 1910a and the other device 200.

In step S5614, the mobile device 1910a connects a call with the other device 200 by establishing the network for the phone call with the other device 200. Since the call is connected between the mobile device 1910a and the other device 200, the mobile device 1910a is enabled to relay a phone call between the wearable device 100c and the other device 200.

In step S5616, the mobile device 1910a receives a call voice of the other user from the other device 200. The other device 200 obtains the call voice of the other user, and transmits the obtained call voice of the other user to the mobile device 1910a. The mobile device 1910a receives, from the other device 200, the call voice of the other user transmitted from the other device 200.

In step S5618, the mobile device 1910a provides the call voice of the other user to the wearable device 100c. The mobile device 1910a relays the call voice of the other user to the wearable device 100c via a network that is preset with the wearable device 100c. In this case, the mobile device 1910a converts a format of the call voice of the other user, according to specification of the wearable device 100c.

In step S5620, the wearable device 100c outputs the call voice of the other user via the speaker of the wearable device 100c. The wearable device 100c converts the call voice of the other user into a text, and outputs the text via the display of the wearable device 100c.

In step S5622, the wearable device 100c obtains a call voice that is input from the user. For the phone call with the other user, the user may speak the call voice toward the wearable device 100c, and the wearable device 100c may record the call voice of the user.

In step S5624, the wearable device 100c provides the call voice of the user to the mobile device 1910a, and in step S5626, the mobile device 1910a provides the call voice of the user to the other device 200. The mobile device 1910a may relays the call voice of the user to the other device 200.

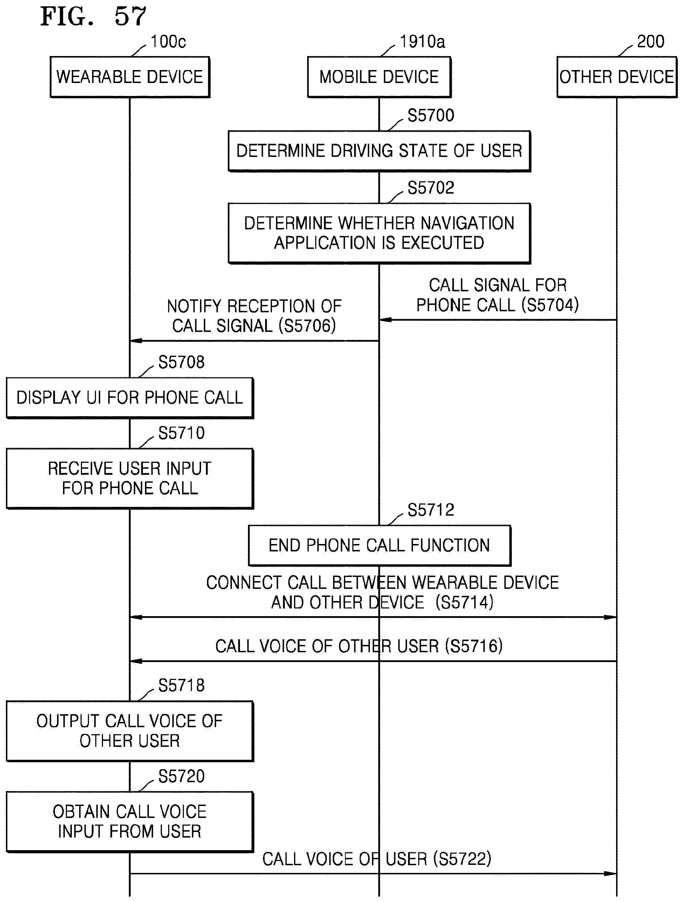

FIG. 57 illustrates a method of directly performing a phone call with the other device 200, the method being performed by the wearable device 100c of a user who is driving, according to an embodiment of the present invention.

Steps S5700 through S5710 of FIG. 57 correspond to Steps S5600 through S5610 of FIG. 56, and thus will not be described here for convenience of description.

In step S5712, the mobile device 1910a ends a phone call function after the mobile device 1910a notifies the wearable device 100c of reception of a call. The wearable device 100c transmits, to the mobile device 1910a, an acknowledgement (ACK) signal indicating that the wearable device 100c has successfully received the notification of the reception of the call. After the mobile device 1910a receives the ACK signal, the mobile device 1910a ends the phone call function for a phone call with the other device 200.

However, a time when the mobile device 1910a ends the phone call function is not limited thereto. For example, after the mobile device 1910a is certain of a start of a phone call between the wearable device 100c and the other device 200, the mobile device 1910a ends the phone call function. Alternatively, after the wearable device 100c requests the other device 200 to establish a network for the phone call with the other device 200, the mobile device 1910a ends the phone call function.

In step S5714, the wearable device 100c establishes the network for the phone call with the other device 200. After the wearable device 100c receives a user input for the phone call, the wearable device 100c requests the other device 200 for call connection by using a telephone number of the other device 200 that is received from the mobile device 1910a. In this case, the wearable device 100c notifies the other device 200 that the user of the wearable device 100c and a user of the mobile device 1910a are identical.

The other device 200 receives the request for the call connection from the wearable device 100c and displays a user interface for the call connection on a display thereof. The other device 200 displays on the displayed user interface a question such as "Do you want to connect a call to the wearable device 100c currently used by the user of the mobile device 1910a that you called?"

The other device 200 establishes a network for a call between the other device 200 and the wearable device 100c, based on a user input to the displayed user interface.

In step S5716, the wearable device 100c receives a call voice of the other user from the other device 200. The other device 200 obtains the call voice of the other user, and transmits the obtained call voice of the other user to the wearable device 100c.

In step S5718, the wearable device 100c outputs the call voice of the other user via a speaker of the wearable device 100c. The wearable device 100c converts the call voice of the other user into a text, and outputs the text via a display of the wearable device 100c.

In step S5720, the wearable device 100c obtains a call voice that is input from the user. For the phone call with the other user, the user may speak the call voice toward the wearable device 100c, and the wearable device 100c may record the call voice of the user.

In step S5722, the wearable device 100c provides the call voice of the user to the other device 200.

As described above, according to the one or more of the above embodiments, when the wearable device recognizes motion of a user and provides a preset function, it is possible to prevent the wearable device from performing a misoperation different from an intention of the user.

Also, according to the one or more of the above embodiments, when a user of the wearable device is driving, it is possible to improve user convenience by changing setting of a function of the wearable device or by executing a required function.

Also, according to the one or more of the above embodiments, while the user of the wearable device is driving, it is possible to provide various functions to the user by communicating with a vehicle.

Also, according to the one or more of the above embodiments, it is possible to allow the wearable device to further correctly recognize a state of the user while the user is driving.

The one or more embodiments can also be embodied as computer readable codes on a computer readable recording medium. The computer readable recording medium is any data storage device that can store data which can be thereafter read by a computer system.

The computer readable codes, when read and executed by the computer readable recording medium, perform a method of controlling a device according to the one or more embodiments. The computer readable codes may be formed of various programming languages. Also, functional programs, codes, and code segments for accomplishing the one or more embodiments can be easily construed by programmers skilled in the art to which the present invention pertains.

Examples of the computer readable recording medium include ROM, RAM, CD-ROMs, magnetic tapes, floppy disks, optical data storage devices, etc. The computer readable recording medium can also be distributed over network coupled computer systems so that the computer readable code is stored and executed in a distributed fashion.

It should be understood that the embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the scope as defined by the appended claims.

## Claims

1. A method of controlling a wearable device (100a) worn by a user, the method comprising:
obtaining (S402, S4002) multiple types of state information of the wearable device (100a) from a plurality of sensors included in the wearable device (100a);
determining (S4004) whether a user of the wearable device (100a) is in a vehicle based on a first type of state information comprising at least one of a vibration detected by the wearable device, communication set with the vehicle, or speed or acceleration detected by the wearable device;
based on determining that the user of the wearable device (100a) is in the vehicle, determining (S404) whether the user of the wearable device is driving based on a second type of state information comprising motion information detected by the wearable device (100a); and
based on determining that the user is driving, changing (S406) a setting of a first function of the wearable device (100a), the first function operating based on the detected motion information of the wearable device, wherein changing (S406) the setting of the first function comprises deactivating (S504) the first function of the wearable device (100a).

2. The method of claim 1, wherein the first type of state information comprises vibration information, and
the determining (S4002) whether the user of the wearable device (100a) is in a vehicle comprises determining that the user of the wearable device (100a) is in a vehicle based on detecting (S2504) a vibration having a prestored pattern from the vibration information.

3. The method of claim 1, wherein the determining (S4002) whether the user of the wearable device (100a) is in a vehicle comprises determining that the user of the wearable device (100a) is in a vehicle based on setting communication with the vehicle.

4. The method of claim 1, wherein the first function is one of: a pedometer function or an automatic screen-on function.

5. The method of claim 1, wherein determining whether the user of the wearable device (100a) is driving comprises determining that the user of the wearable device (100a) is driving based on detecting a steering wheel turning motion from the motion information.

6. The method of claim 1, wherein determining whether the user of the wearable device (100a) is driving (S404) comprises determining that the user of the wearable device (100a) is driving based on detecting a rotational movement of stepping on or pressing a vehicle pedal from the motion information.

7. The method of claim 1, wherein the determining whether the user of the wearable device (100a) is driving further comprises determining that the user of the wearable device (100a) is driving based on detecting a vehicle that is registered to the wearable device (100a).

8. The method of claim 1, further comprising, based on determining that the user is not in the vehicle, changing the setting of a second function of the wearable device (100a).

9. The method of claim 1, further comprising, based on determining that the user is not in the vehicle, performing at least one of a user interface for controlling a sound output function of a radio, an optical disc player of the vehicle, or a user interface for controlling navigation.

10. The method of claim 1, further comprising, based on determining that the user is not in the vehicle, changing at least one of communication setting of Wi-Fi or communication setting of Bluetooth.

11. A wearable device (100a) comprising:
a sensor unit (210) configured to obtain multiple types of state information of the wearable device (100a) from a plurality of sensors included in the wearable device; and
a control unit (220) configured to:
determine whether a user who is wearing the wearable device (100a) is in a vehicle based on a first type of state information comprising at least one of a vibration detected by the wearable device, communication set with the vehicle, or speed or acceleration detected by the wearable device;
based on determining that the user of the wearable device (100a) is in the vehicle, determine whether the user of the wearable device (100a) is driving based on a second type of state information comprising detected motion information of the wearable device (100a); and
based on determining that the user is driving, change a setting of a first function of the wearable device (100a), the first function operating based on the motion information detected by the wearable device, wherein changing the setting of the first function comprises deactivating the first function of the wearable device (100a).

12. The wearable device (100a) of claim 11, wherein the sensor unit (210) is further configured to obtain a vibration information, and the control unit (220) is further configured to determine that the user of the wearable device (100a) is in a vehicle based on detecting a vibration having a prestored pattern from the vibration information.

13. The wearable device (100a) of claim 11, wherein the control unit (220) is further configured to determine that the user of the wearable device (100a) is in a vehicle based on setting communication with the vehicle.

14. The wearable device (100a) of claim 11, wherein the first function is one of: a pedometer function or an automatic screen-on function.

15. The wearable device (100a) of claim 11, wherein the sensor unit (210) configured to obtain motion information, and the control unit (220) is further configured to determine that the user of the wearable device (100a) is driving based on detecting a steering wheel turning motion from the motion information.

## Patentansprüche

1. Verfahren zur Steuerung einer Wearable-Vorrichtung (100a), die von einem Benutzer getragen wird, wobei das Verfahren Folgendes umfasst:
Erhalten (S402, S4002) mehrfacher Arten von Zustandsinformationen der Wearable-Vorrichtung (100a) von einer Vielzahl von Sensoren, die in der Wearable-Vorrichtung (100a) enthalten sind;
Bestimmen (S4004), ob sich ein Benutzer der Wearable-Vorrichtung (100a) in einem Fahrzeug befindet, basierend auf einer ersten Art von Zustandsinformationen, die zumindest eines von einer Vibration, die durch die Wearable-Vorrichtung erfasst wird, einem Kommunikationssatz mit dem Fahrzeug oder einer Geschwindigkeit oder Beschleunigung umfasst, die durch die Wearable-Vorrichtung erfasst wird;
basierend auf dem Bestimmen, dass sich der Benutzer der Wearable-Vorrichtung (100a) in dem Fahrzeug befindet, Bestimmen (S404), ob der Benutzer der Wearable-Vorrichtung fährt, basierend auf einer zweiten Art von Zustandsinformationen, die Bewegungsinformationen umfassen, die durch die Wearable-Vorrichtung (100a) erfasst werden; und
basierend auf dem Bestimmen, dass der Benutzer fährt, Ändern (S406) einer Einstellung einer ersten Funktion der Wearable-Vorrichtung (100a), wobei die erste Funktion basierend auf den erfassten Bewegungsinformationen der Wearable-Vorrichtung arbeitet, wobei das Ändern (S406) der Einstellung der ersten Funktion das Deaktivieren (S504) der ersten Funktion der Wearable-Vorrichtung (100a) umfasst.

2. Verfahren nach Anspruch 1, wobei die erste Art von Zustandsinformationen Vibrationsinformationen umfasst und
das Bestimmen (S4002), ob sich der Benutzer der Wearable-Vorrichtung (100a) in einem Fahrzeug befindet, das Bestimmen dessen, dass sich der Benutzer der Wearable-Vorrichtung (100a) in einem Fahrzeug befindet, basierend auf dem Erfassen (S2504) einer Vibration mit einem vorab gespeicherten Muster aus den Vibrationsinformationen umfasst.

3. Verfahren nach Anspruch 1, wobei das Bestimmen (S4002), ob sich der Benutzer der Wearable-Vorrichtung (100a) in einem Fahrzeug befindet, das Bestimmen dessen, dass sich der Benutzer der Wearable-Vorrichtung (100a) in einem Fahrzeug befindet, basierend auf dem Einstellen von Kommunikation mit dem Fahrzeug umfasst.

4. Verfahren nach Anspruch 1, wobei die erste Funktion eine von Folgendem ist: eine Schrittzählerfunktion oder eine automatische Bildschirmeinschaltfunktion.

5. Verfahren nach Anspruch 1, wobei das Bestimmen, ob der Benutzer der Wearable-Vorrichtung (100a) fährt, das Bestimmen dessen, dass der Benutzer der Wearable-Vorrichtung (100a) fährt, basierend auf dem Erfassen einer Lenkraddrehbewegung aus den Bewegungsinformationen umfasst.

6. Verfahren nach Anspruch 1, wobei das Bestimmen, ob der Benutzer der Wearable-Vorrichtung (100a) fährt (S404), das Bestimmen dessen, dass der Benutzer der Wearable-Vorrichtung (100a) fährt, basierend auf dem Erfassen einer Rotationsbewegung des Tretens oder Drückens eines Fahrzeugpedals aus den Bewegungsinformationen umfasst.

7. Verfahren nach Anspruch 1, wobei das Bestimmen, ob der Benutzer der Wearable-Vorrichtung (100a) fährt, ferner das Bestimmen dessen, dass der Benutzer der Wearable-Vorrichtung (100a) fährt, basierend auf dem Erfassen eines Fahrzeugs, das für die Wearable-Vorrichtung (100a) registriert ist umfasst.

8. Verfahren nach Anspruch 1, ferner umfassend, basierend auf dem Bestimmen, dass sich der Benutzer nicht in dem Fahrzeug befindet, das Ändern der Einstellung einer zweiten Funktion der Wearable-Vorrichtung (100a).

9. Verfahren nach Anspruch 1, ferner umfassend, basierend auf dem Bestimmen, dass sich der Benutzer nicht in dem Fahrzeug befindet, das Durchführen von mindestens einem von einer Benutzerschnittstelle zum Steuern einer Tonausgabefunktion eines Radios, einem optischen Plattenspieler des Fahrzeugs oder einer Benutzerschnittstelle zum Steuern der Navigation.

10. Verfahren nach Anspruch 1, ferner umfassend, basierend auf dem Bestimmen, dass sich der Benutzer nicht in dem Fahrzeug befindet, das Ändern von zumindest einem von Kommunikationseinstellung von WLAN oder Kommunikationseinstellung von Bluetooth.

11. Wearable-Vorrichtung (100a), umfassend:
eine Sensoreinheit (210), die konfiguriert ist, um mehrfache Arten von Zustandsinformationen der Wearable-Vorrichtung (100a) von einer Vielzahl von Sensoren zu erhalten, die in der Wearable-Vorrichtung enthalten sind; und
eine Steuerungseinheit (220), die zu Folgendem konfiguriert ist:
Bestimmen, ob sich ein Benutzer, der die Wearable-Vorrichtung (100a) trägt, in einem Fahrzeug befindet, basierend auf einer ersten Art von Zustandsinformationen, die zumindest eines von einer Vibration, die durch die Wearable-Vorrichtung erfasst wird, einem Kommunikationssatz mit dem Fahrzeug oder einer Geschwindigkeit oder Beschleunigung umfasst, die durch die Wearable-Vorrichtung erfasst wird;
basierend auf dem Bestimmen, dass sich der Benutzer der Wearable-Vorrichtung (100a) in dem Fahrzeug befindet, Bestimmen, ob der Benutzer der Wearable-Vorrichtung (100a) fährt, basierend auf einer zweiten Art von Zustandsinformationen, die erfasste Bewegungsinformationen der Wearable-Vorrichtung (100a) umfassen; und
basierend auf dem Bestimmen, dass der Benutzer fährt, Ändern einer Einstellung einer ersten Funktion der Wearable-Vorrichtung (100a), wobei die erste Funktion basierend auf den Bewegungsinformationen arbeitet, die durch die Wearable-Vorrichtung erfasst werden, wobei das Ändern der Einstellung der ersten Funktion das Deaktivieren der ersten Funktion der Wearable-Vorrichtung (100a) umfasst.

12. Wearable-Vorrichtung (100a) nach Anspruch 11, wobei die Sensoreinheit (210) ferner konfiguriert ist, um eine Vibrationsinformation zu erhalten, und
die Steuerungseinheit (220) ferner konfiguriert ist, um zu bestimmen, dass sich der Benutzer der Wearable-Vorrichtung (100a) in einem Fahrzeug befindet, basierend auf dem Erfassen einer Vibration mit einem vorab gespeicherten Muster aus den Vibrationsinformationen.

13. Wearable-Vorrichtung (100a) nach Anspruch 11
wobei die Steuerungseinheit (220) ferner konfiguriert ist, um zu bestimmen, dass sich der Benutzer der Wearable-Vorrichtung (100a) in einem Fahrzeug befindet, basierend auf dem Einstellen von Kommunikation mit dem Fahrzeug.

14. Wearable-Vorrichtung (100a) nach Anspruch 11,
wobei die erste Funktion eine von Folgendem ist: eine Schrittzählerfunktion oder eine automatische Bildschirmeinschaltfunktion.

15. Wearable-Vorrichtung (100a) nach Anspruch 11,
wobei die Sensoreinheit (210) konfiguriert ist, um Bewegungsinformationen zu erhalten, und
die Steuerungseinheit (220) ferner konfiguriert ist, um zu bestimmen, dass der Benutzer der Wearable-Vorrichtung (100a) fährt, basierend auf dem Erfassen einer Lenkraddrehbewegung aus den Bewegungsinformationen.

## Revendications

1. Procédé de commande d'un dispositif portable (100a) porté par un utilisateur, le procédé comprenant :
l'obtention (S402, S4002) de multiples types d'informations d'état du dispositif portable (100a) à partir d'une pluralité de capteurs compris dans le dispositif portable (100a) ;
la détermination (S4004) si un utilisateur du dispositif portable (100a) se trouve dans un véhicule sur la base d'un premier type d'informations d'état comprenant au moins l'une d'une vibration détectée par le dispositif portable, d'une communication établie avec le véhicule, ou d'une vitesse ou d'une accélération détectée par le dispositif portable ;
sur la base de la détermination que l'utilisateur du dispositif portable (100a) se trouve dans le véhicule, la détermination (S404) si l'utilisateur du dispositif portable conduit sur la base d'un deuxième type d'informations d'état comprenant des informations de mouvement détectées par le dispositif portable (100a) ; et
sur la base de la détermination que l'utilisateur conduit, la modification (S406) d'un réglage d'une première fonction du dispositif portable (100a), la première fonction fonctionnant sur la base des informations de mouvement détectées du dispositif portable, dans lequel la modification (S406) du réglage de la première fonction comprend la désactivation (S504) de la première fonction du dispositif portable (100a).

2. Procédé selon la revendication 1, dans lequel le premier type d'informations d'état comprend des informations de vibration, et
la détermination (S4002) si l'utilisateur du dispositif portable (100a) se trouve dans un véhicule comprend la détermination que l'utilisateur du dispositif portable (100a) se trouve dans un véhicule sur la base de la détection (S2504) d'une vibration comportant un motif pré-mémorisé à partir des informations de vibration.

3. Procédé selon la revendication 1, dans lequel la détermination (S4002) si l'utilisateur du dispositif portable (100a) se trouve dans un véhicule comprend la détermination que l'utilisateur du dispositif portable (100a) se trouve dans un véhicule sur la base de l'établissement d'une communication avec le véhicule.

4. Procédé selon la revendication 1, dans lequel la première fonction est l'une parmi : une fonction de podomètre ou une fonction d'activation d'écran automatique.

5. Procédé selon la revendication 1, dans lequel la détermination si l'utilisateur du dispositif portable (100a) conduit comprend la détermination que l'utilisateur du dispositif portable (100a) conduit sur la base de la détection d'un mouvement de rotation du volant à partir des informations de mouvement.

6. Procédé selon la revendication 1, dans lequel la détermination si l'utilisateur du dispositif portable (100a) conduit (S404) comprend la détermination que l'utilisateur du dispositif portable (100a) conduit sur la base de la détection d'un mouvement de rotation pour mettre le pied ou appuyer sur une pédale de véhicule à partir des informations de mouvement.

7. Procédé selon la revendication 1, dans lequel la détermination si l'utilisateur du dispositif portable (100a) conduit comprend en outre la détermination que l'utilisateur du dispositif portable (100a) conduit sur la base de la détection d'un véhicule qui est enregistré sur le dispositif portable (100a).

8. Procédé selon la revendication 1, comprenant en outre, sur la base de la détermination que l'utilisateur ne se trouve pas dans le véhicule, la modification du réglage d'une deuxième fonction du dispositif portable (100a).

9. Procédé selon la revendication 1, comprenant en outre, sur la base de la détermination que l'utilisateur ne se trouve pas dans le véhicule, l'exécution d'au moins l'une d'une interface utilisateur pour commander une fonction de sortie sonore d'une radio, d'un lecteur de disque optique du véhicule ou d'une interface utilisateur pour commander la navigation.

10. Procédé selon la revendication 1, comprenant en outre, sur la base de la détermination que l'utilisateur ne se trouve pas dans le véhicule, la modification d'au moins l'un d'un réglage de communication Wi-Fi ou d'un réglage de communication Bluetooth.

11. Dispositif portable (100a) comprenant :
une unité de capteur (210) configurée pour obtenir de multiples types d'informations d'état du dispositif portable (100a) à partir d'une pluralité de capteurs compris dans le dispositif portable ; et
une unité de commande (220) configurée pour :
déterminer si un utilisateur qui porte le dispositif portable (100a) se trouve dans un véhicule sur la base d'un premier type d'informations d'état comprenant au moins l'une d'une vibration détectée par le dispositif portable, d'une communication établie avec le véhicule, ou d'une vitesse ou d'une accélération détectée par le dispositif portable ;
sur la base de la détermination que l'utilisateur du dispositif portable (100a) se trouve dans le véhicule, déterminer si l'utilisateur du dispositif portable (100a) conduit sur la base d'un deuxième type d'informations d'état comprenant des informations de mouvement détectées du dispositif portable (100a) ; et
sur la base de la détermination que l'utilisateur conduit, la modification d'un réglage d'une première fonction du dispositif portable (100a), la première fonction fonctionnant sur la base des informations de mouvement détectées par le dispositif portable, dans lequel la modification du réglage de la première fonction comprend la désactivation de la première fonction du dispositif portable (100a).

12. Dispositif portable (100a) selon la revendication 11, dans lequel l'unité de capteur (210) est en outre configurée pour obtenir des informations de vibration, et
l'unité de commande (220) est en outre configurée pour déterminer que l'utilisateur du dispositif portable (100a) se trouve dans un véhicule sur la base de la détection d'une vibration comportant un motif pré-mémorisé à partir des informations de vibration.

13. Dispositif portable (100a) selon la revendication 11
dans lequel l'unité de commande (220) est en outre configurée pour déterminer que l'utilisateur du dispositif portable (100a) se trouve dans un véhicule sur la base de l'établissement d'une communication avec le véhicule.

14. Dispositif portable (100a) selon la revendication 11, dans lequel la première fonction est l'une parmi : une fonction de podomètre ou une fonction d'activation d'écran automatique.

15. Dispositif portable (100a) selon la revendication 11, dans lequel l'unité de capteur (210) est configurée pour obtenir des informations de mouvement, et
l'unité de commande (220) est en outre configurée pour déterminer que l'utilisateur du dispositif portable (100a) conduit sur la base de la détection d'un mouvement de rotation du volant à partir des informations de mouvement.
